# EUROPEAN PATENT APPLICATION

(11) **EP 1 818 659 A1**
(43) Date of publication of application: **15.08.2007**
(21) Application number: 06713099.7
(22) Date of filing: 06.02.2006
(51) Int. Cl.: G01L 3/10, B62D 5/04

(54) **ROTATION ANGLE AND TORQUE DETECTION DEVICE**

(30) Priority: 10.02.2005 JP 2005034024; 28.02.2005 JP 2005052810; 28.03.2005 JP 2005090893
(71) Applicant: MATSUSHITA ELECTRIC INDUSTRIAL CO., LTD., Osaka 571-8501 (JP)
(72) Inventor: UEHIRA, Kiyotaka c/o Matsushita Elec. Ind. Co., Ltdc, 19F MatsushitaIMP Bldg.3-7, Shiromi 1-chome,Chuo-ku Osaka-shi Osaka 540-6319 (JP); ICHINOMIYA, Noritaka c/o Matsushita Elec. Ind. Co., Ltd, Shir. 1-chome,Chuo-ku,Osaka-shi Osaka 540-6319 (JP); OIKE, Kouji c/o Matsushita Elec. Ind. Co., Ltd., Shiromi1-chome,Chuo-ku,Osaka-shi Osaka 540-6319 (JP)
(74) Representative: Grünecker, Kinkeldey, Stockmair & Schwanhäusser Anwaltssozietät
(86) International application number: PCT/JP2006/301956
(87) International publication number: WO 2006/085499

(57) **Abstract**

A detection device for detecting a rotation angle and a torque includes a first rotating body, a first target fixed to the first rotating body, a first gear fixed to the first rotating body, a first magnetic detector element for detecting a rotation angle of the first rotating body, a second gear engaged with the first gear, a second rotating body having the second gear fixed thereto, a magnet provided at the second rotating body, a second magnetic detector element for detecting a rotation angle of the second rotating body, a third rotating body, a second target fixed to the third rotating body, a third magnetic detector element for detecting a rotation angle of the third rotating body, a torsion bar connected between the first rotating body and the second rotating body, and a controller operable to determine the rotation angle of the first rotating body and a torque applied to the torsion bar based on signals output from the first magnetic detector element, the second magnetic detector element, and the third magnetic detector element. The detection device detects an absolute rotation angle of plural turns and a torque accurately and precisely.

## Description

### TECHNICAL FIELD

The present invention relates to a rotation angle and torque detection device for detecting an absolute rotation angle and a torque of a rotating device, such as a power steering system of a vehicle.

### BACKGROUND OF THE INVENTION

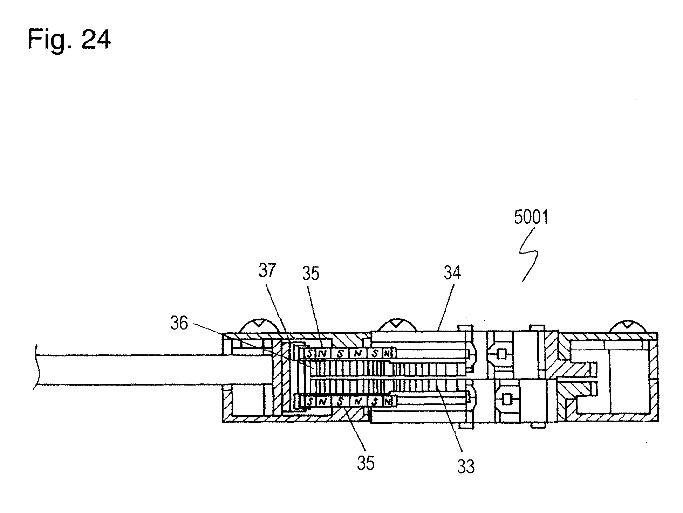

Fig. 24 is a schematic view of conventional torque sensor 5001 disclosed in Japanese Patent Laid-Open Publication No.11-194007. Gear 33 is fixed to a rotation shaft (not shown) of which rotation angle is to be detected via engaging spring 34. Gear 33 is engaged with gear 36. Code plate 35 having plural magnetic poles is disposed on the outer periphery of gear 36. The magnetic poles of code plate 35 move according to the rotation of the rotating shaft. Detector element 37 facing the outer periphery of gear 36 counts the number of the magnetic poles which moves, thereby detecting a rotation angle of the rotating shaft.

Torque sensor 5001 is mounted to each of two shafts connected via a torsion bar. If a torque is produced between the shafts, the amount of the torque is detected by comparing rotation angles of the shafts.

Torque sensor 5001 detects the rotation angle from the number of the moving magnetic poles, consequently requiring the magnetic poles to have small sizes in order to improve its resolution. Code plate 35 is connected to the shaft via gears 33 and 36, hence causing a backlash preventing the rotation angle from being detected accurately. Torque sensor 5001 detects a relative rotation angle, but cannot detect an absolute rotation angle.

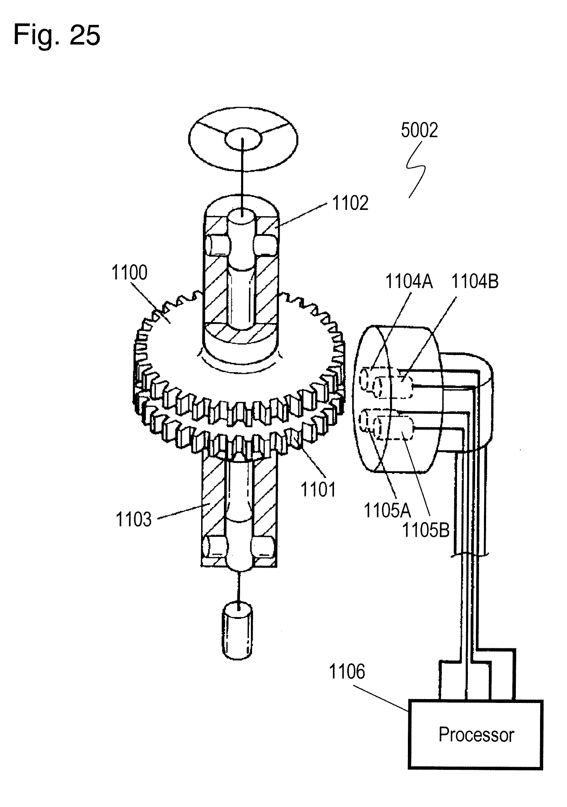

Fig. 25 is a schematic view of conventional torque detector 5002 disclosed in Japanese Patent Laid-Open Publication No.2003-98018. Targets 1100 and 1101 made of ferromagnetic material are attached to shafts 1102 and 1103, respectively, to detect the rotation angles of the shafts. Target 1100 faces magnetic sensors 1104A and 1104B. Target 1101 faces magnetic sensors 1105A and 1105B. Magnetic sensors 1104A, 1104B, 1105A and 1105B detect rotational displacements of targets 1100 and 1101. Processor 1106 determines respective rotation angles of shaft 1102 and 1103 based on the detected rotational displacements. If shafts 1102 and 1103 have a difference in their rotation angles due to torque applied to the two shafts, processor 1106 compares the difference between the rotation angles of targets 1100 and 1101 as to detect the amount of the torque.

However, torque detector 5002 can hardly detect a rotation angle greater than that corresponding to one turn since magnetic sensors 1104A, 1104B, 1105A and 1105B repeat producing constant outputs after targets 1100 and 1101 rotate by one turn.

Targets 1100 and 1101 are made of ferromagnetic material. Variations of material and dimensional accuracy of the targets influences its detecting accuracy. Hence, the targets are processed accurately. Bias magnets are required for magnetic sensors 1104A, 1104B, 1105A and 1105B.

### SUMMARY OF THE INVENTION

A detection device for detecting a rotation angle and a torque includes a first rotating body, a first target fixed to the first rotating body, a first gear fixed to the first rotating body, a first magnetic detector element for detecting a rotation angle of the first rotating body, a second gear engaged with the first gear, a second rotating body having the second gear fixed thereto, a magnet provided at the second rotating body, a second magnetic detector element for detecting a rotation angle of the second rotating body, a third rotating body, a second target fixed to the third rotating body, a third magnetic detector element for detecting a rotation angle of the third rotating body, a torsion bar connected between the first rotating body and the second rotating body, and a controller operable to determine the rotation angle of the first rotating body and a torque applied to the torsion bar based on signals output from the first magnetic detector element, the second magnetic detector element, and the third magnetic detector element.

The detection device detects an absolute rotation angle of plural turns and a torque accurately and precisely.

### BRIEF DESCRIPTION OF THE DRAWINGS

Fig. 1 is a schematic view of an absolute rotation angle and torque detection device in accordance with Exemplary Embodiment 1 of the present invention.
Fig. 2A shows output signals of magnetic detector elements of the detection device in accordance with Embodiment 1.
Fig. 2B shows the relationship between mechanical rotation angles of an input shaft and an output shaft and rotation angles in processing of the detection device in accordance with Embodiment 1.
Fig. 3A shows output signals of a magnetic detector element of the detection device in accordance with Embodiment 1.
Fig. 3B shows the relationship between mechanical rotation angles of the input shaft and the output shaft, and rotation angles in processing of the detection device in accordance with Embodiment 1.
Fig. 4 is a circuit block diagram of the detection device in accordance with Embodiment 1.
Fig. 5A shows a theoretical value and an actual value of absolute rotation angles of a rotating body of the detection device in accordance with Embodiment 1.
Fig. 5B shows a theoretical value and an actual value of absolute rotation angles of a rotating body of the detection device in accordance with Embodiment 1.
Fig. 6 shows torque-detecting characteristics of the detection device in accordance with Embodiment 1.
Fig. 7 shows a rotation angle and an absolute rotation angle obtained by the detection device in accordance with Embodiment 1.
Fig. 8 shows output signals of a magnetic detector element of the detection device in accordance with Embodiment 1.
Fig. 9A is a front sectional view of an absolute-rotation-angle and torque detection device in accordance with Exemplary Embodiment 2 of the invention.
Fig. 9B is a side sectional view of the detection device shown in Fig. 9A.
Fig. 9C is a sectional view of the detection device at line 9C-9C shown in Fig. 9A.
Fig. 10 is a side sectional view of the detection device in accordance with Embodiment 2.
Fig. 11A is a front view of a ring magnet of the detection device in accordance with Embodiment 2.
Fig. 11B is a sectional view of the ring magnet at line 10B-10B shown in Fig. 11A.
Fig. 12 is a sectional view of another rotating body of the detection device in accordance with Embodiment 2.
Fig. 13 is a sectional view of still another rotating body of the detection device in accordance with Embodiment 2.
Fig. 14 is a sectional view of a further rotating body of the detection device in accordance with Embodiment 2.
Fig. 15A is a schematic view of a rotation-angle and torque detection device in accordance with Exemplary Embodiment 3 of the invention.
Fig. 15B is a sectional view of the detection device at line 15B-15B shown in Fig. 15A.
Fig. 15C is a sectional view of an essential part of the detection device shown in Fig. 15A.
Fig. 16 is a circuit block diagram of the detection device in accordance with Embodiment 3.
Fig. 17A shows output signals of magnetic detector elements of the detection device in accordance with Embodiment 3.
Fig. 17B shows the relationship between mechanical rotation angles of an input shaft and an output shaft and rotation angles in processing of the detection device in accordance with Embodiment 3.
Fig. 18A shows output signals of a magnetic detector element of the detection device in accordance with Embodiment 3.
Fig. 18B shows the relationship between mechanical rotation angles of the input shaft and the output shaft and rotation angles in processing of the detection device in accordance with Embodiment 1.
Fig. 19A shows output signals of a magnetic detector element of the detection device in accordance with Embodiment 3.
Fig. 19B shows the relationship between mechanical rotation angles of the input shaft and the output shaft and rotation angles in processing of the detection device in accordance with Embodiment 1.
Fig. 20A shows a rotation angle of a rotating body of the detection device in accordance with Embodiment 3.
Fig. 20B shows a rotation angle of a rotating body of the detection device in accordance with Embodiment 3.
Fig. 20C shows rotation angles of the rotating bodies of the detection device in accordance with Embodiment 3.
Fig. 20D shows a rotation angle of a rotating body of the detection device in accordance with Embodiment 3.
Fig. 20E shows a rotation angle of a rotating body of the detection device in accordance with Embodiment 3.
Fig. 21A shows a rotation angle of the rotating body of the detection device in accordance with Embodiment 3.
Fig. 21B shows a rotation angle of the rotating body of the detection device in accordance with Embodiment 3.
Fig. 21C shows a rotation angle of the rotating body of the detection device in accordance with Embodiment 3.
Fig. 22 shows torque-detecting characteristics of the detection device in accordance with Embodiment 3.
Fig. 23 shows output signals of a magnetic detector element of the detection device in accordance with Embodiment 3.
Fig. 24 is a schematic view of a conventional torque sensor for detecting a rotation angle and a torque.
Fig. 25 is a schematic view of a conventional torque detector.

### REFERENCE NUMERALS

- 1: Rotating Body (First Rotating Body)
- 1A: Gear (First Gear)
- 2: Input Shaft
- 3: Target (First Target)
- 4: Rotating Body (Third Rotating Body)
- 5: Output Shaft
- 6: Target (Second Target)
- 7: Torsion Bar
- 8: Rotating Body (Second Rotating Body)
- 8B: Gear (Second Gear)
- 9: Magnet
- 10: Magnetic Detector element (Second Magnetic Detector element)
- 11: Magnetic Detector element (First Magnetic Detector element)
- 12: Magnetic Detector element (Third Magnetic Detector element)
- 14: Controller
- 15: Memory
- 16: Amplifier
- 16A: Detector
- 1001: Rotating Body (First Rotating Body)
- 1004: Ring Magnet
- 1004A: Ring Magnet
- 1005: Rotating Body (Third Rotating Body)
- 1007A: Magnetic Detector element (First Magnetic Detector element)
- 1007B: Magnetic Detector element (Third Magnetic Detector element)
- 1009: Gear (First Gear)
- 1010: Gear (Second Gear, Second Rotating Body)
- 1011: Magnet (First Magnet)
- 1012: Magnetic Detector element (Second Magnetic Detector element)
- 1016: Projection
- 1017: Recess
- 1018: Pawl
- 1020: Leaf Spring
- 1022: Torsion Bar
- 8001: Rotating Body (First Rotating Body)
- 8002: Input Shaft
- 8003: Target (First Target)
- 8004: Rotating Body (Third Rotating Body)
- 8005: Output Shaft
- 8006: Target (Second Target)
- 8007: Torsion Bar
- 8008: Gear (First Gear)
- 8009: Rotating Body (Second Rotating Body)
- 8009A: Gear (Second Gear)
- 8010: Magnet (First Magnet)
- 8011: Magnetic Detector element (Third Magnetic Detector element)
- 8012: Rotating Body (Fourth Rotating Body)
- 8012A: Gear (Third Gear)
- 8013: Magnet (Second Magnet)
- 8014: Magnetic Detector element (Fourth Magnetic Detector element)
- 8015: Magnetic Detector element (First Magnetic Detector element)
- 8016: Magnetic Detector element (Second Magnetic Detector element)
- 8025: Amplifier
- 8026: Controller
- 8027: Memory
- 8028: Switch

### DETAILED DESCRIPTION OF THE PREFERRED EMBODIMENTS EXEMPLARY EMBODIMENT 1

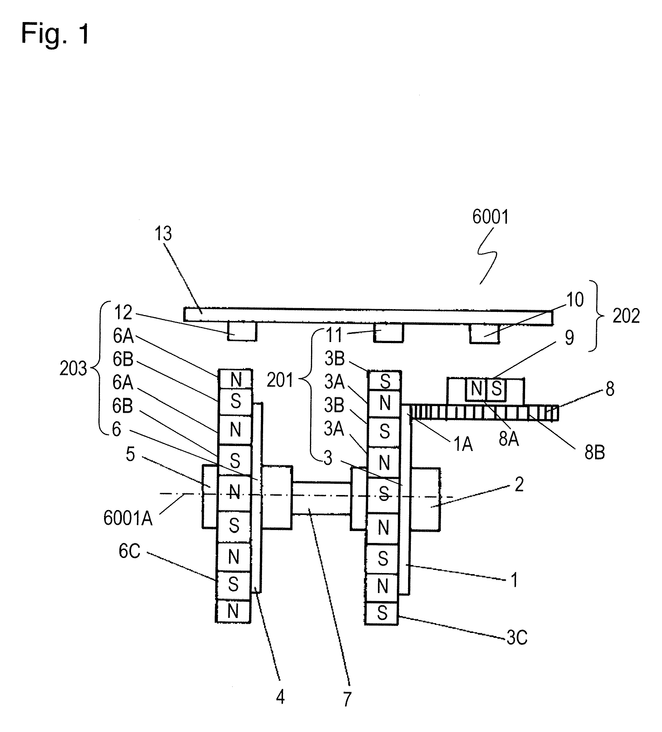

Fig. 1 is a schematic view of rotation angle and torque detecting device 6001 in accordance with Exemplary Embodiment 1 of the present invention. Rotating body 1 includes gear 1A which is fitted and coupled with input shaft 2 and which rotates by plural turns. Gear 1A is fixed to rotating body 1. Target 3 is fixed to rotating body 1. Magnetic poles 3A and 3B having polarities opposite to each other are alternately arranged at constant intervals on outer periphery 3C of target 3. Rotating body 4 includes a gear which is fitted and coupled with output shaft 5 and which rotates by plural turns. Target 6 is fixed to rotating body 4. Magnetic poles 6A and 6B having polarities opposite to each other are alternately arranged at constant intervals on outer periphery 6C of target 6. Torsion bar 7 is fixed between input shaft 2 and output shaft 5 along coaxial line 6001A. That is, torsion bar 7 is connected between rotating body 1 and rotating body 4. Rotating body 8 includes gear 8B engaged with gear 1A of rotating body 1. Magnet 9 is provided in center 8A of rotating body 8. Gear 8B is fixed to rotating body 8. Magnetic detector element 10 faces magnet 10. Magnetic detector element 11 faces outer periphery 3C of target 3, while magnetic detector element 12 faces outer periphery 6C of target 6. Magnetic detector elements 10, 11 and 12 are mounted onto circuit board 13. Gear 1A of rotating body 1 is engaged with gear 8B of rotating body 8, consequently causing rotating body 8 to rotate according to the rotation of rotating body 1 at a rotation speed determined by the ratio of the number of teeth of gear 1A to that of gear 8B.

The number of magnetic poles 3A and 3B of target 3 is identical to the number of magnetic poles 6A and 6B of target 6. The number of magnetic poles 3A, 3B, 6A and 6B is determined according to a maximum torque to be detected and a spring constant of torsion bar 7. For example, if the maximum torque to be detected is ±12N•m and the spring constant of torsion bar 7 is 2N•m/deg, torsion bar 7 has a maximum torsion angle of ±4 degrees. Target 3 has thirty magnetic poles of the total of magnetic poles 3A and 3B. Target 6 has thirty magnetic poles of the total of magnetic poles 6A and 6B. That is, target 3 has fifteen N-poles, i.e., fifteen magnetic poles 3A and fifteen S-poles, i.e., fifteen magnetic poles 3B. Target 6 has fifteen N-poles, i.e., fifteen magnetic poles 6A and fifteen S-poles, i.e., fifteen magnetic poles 6B. In this case, magnetic poles adjacent to each other arranged at an angular interval of 12 degrees. Torsion bar 7 has the maximum twisting angle of ±4 degrees, accordingly preventing the difference between respective absolute rotation angles of rotating bodies 1 and 4 from exceeding 8 degrees. Hence, magnetic poles 3A, 3B, 6A and 6B of targets 3 and 6 allow the torque on torsion bar 7 to be detected properly.

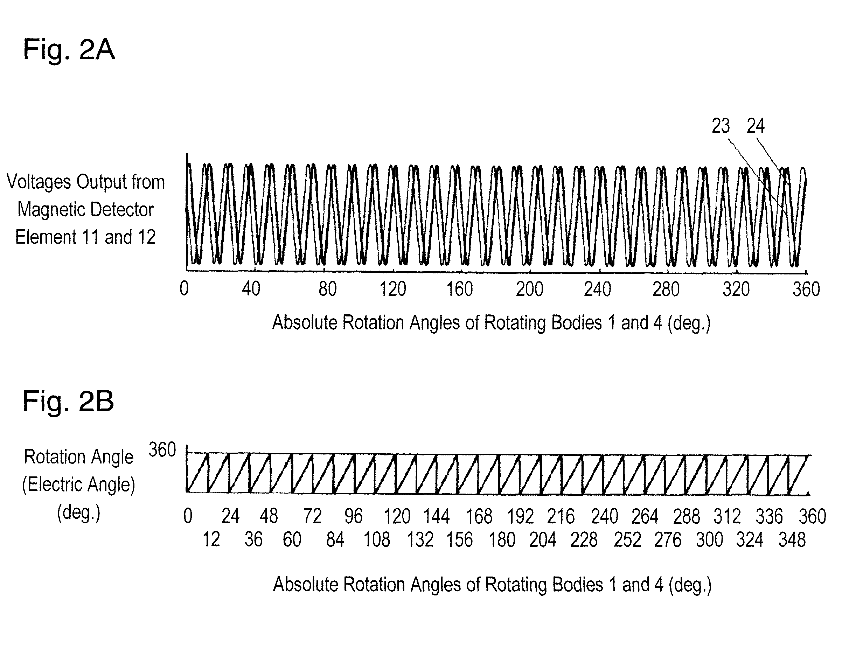

An operation of detection device 6001 including magnetic resistance elements (MR elements) used as magnetic detector elements 10, 11 and 12 will be described below. Detecting magnetic fields of the magnetic poles and the magnets, each of the magnetic detector elements outputs a sine-wave signal and a cosine-wave signal according to the rotation angle of the rotating body. Fig. 2 shows signals output from magnetic detector elements 10, 11 and 12. Each of magnetic detector elements 11 and 12 outputs one cycle of a sine-wave signal per one magnetic pole according to the magnetic field of magnetic poles 3A and 3B of target 3 and magnetic poles 6A and 6B of target 6, respectively. That is, magnetic detector element 11 outputs cycles of the sine-wave signal of which number is identical to the number of magnetic poles 3A and 3B during one rotation of target 3. Magnetic detector element 12 outputs cycles of the sine-wave signal of which number is identical to the number of magnetic poles 6A and 6B per one turn of target 6. The sine-wave signals supplied from the magnetic detector elements are amplified by an amplifier so as to have predetermined amplitudes, and then, are supplied to a controller, such as a microcomputer or a CPU. The sine-wave signals are converted into digital signals by an A/D converter in the controller and are processed. Thus, the controller determines the absolute rotation angles of targets 3 and 6, i.e., rotating bodies 1 and 4. Target 3 having magnetic poles 3A and 3B and magnetic detector element 11 constitute rotation-angle detector 201 for detecting the rotation angle of rotating body 1. Target 6 having magnetic poles 6A and 6B and magnetic detector element 11 constitute rotation-angle detector 203 for detecting the rotation angle of rotating body 5. Magnet 9 and magnetic detector element 10 constitute rotation-angle detector 202 for detecting the rotation angle of rotating body 4. Fig. 2A shows voltages of the sine-wave signals supplied from magnetic detector elements 11 and 12. The horizontal axis represents the absolute rotation angles of input shaft 2 and output shaft 5. The vertical axis represents sine-wave signal 24 output from magnetic detector element 11 and cosine-wave signal 23 output from magnetic detector element 12. Fig. 2B shows the relationship between the absolute rotation angle, i.e., a mechanical rotation angle, (the horizontal axis) of each of the input shaft and the output shaft, and the absolute rotation angle (the vertical axis) of each of rotating bodies 1 and 4, i.e., a phase of each of sine-wave signal 23 and cosine-wave signal 24 in processing of the controller.

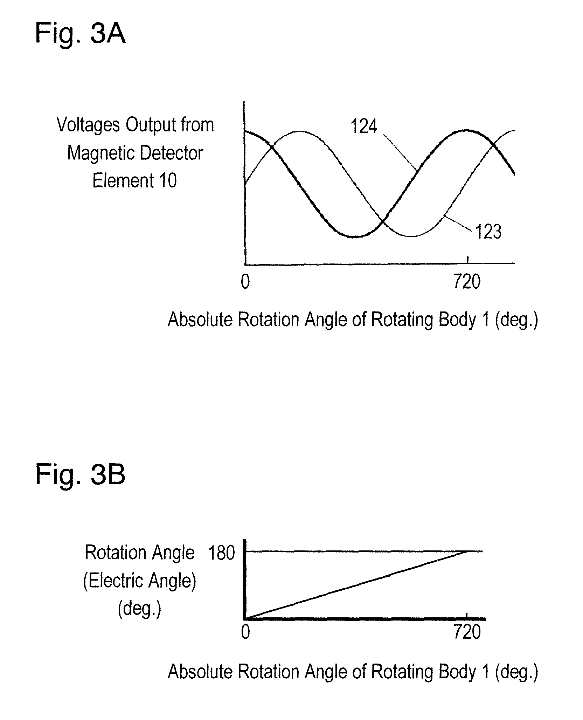

Magnetic detector element 10 detects the magnetic field of magnet 9 provided at center 8A of rotating body 8, and output two cycles of each of a sine-wave signal and a cosine-wave signal per one rotation of magnet 9. The controller processes the signals to determine an absolute rotation angle of rotating body 8. Fig. 3A shows sine-wave signal 124 and cosine-wave signal 123 supplied from magnetic detector element 10. In Fig. 3A, the horizontal axis represents the absolute rotation angle of each of input shaft 2 and output shaft 5. In Fig. 3A, the vertical axis represents a voltage output from magnetic detector element 10. Fig. 3B shows an absolute rotation angle, i.e., a mechanical rotation angle, (the horizontal axis) of each of the input shaft and the output shaft, and a phase (the vertical axis) of each of sine-wave signal 124 and cosine-wave signal 123, i.e., an absolute rotation angle of rotating body 8 in processing.

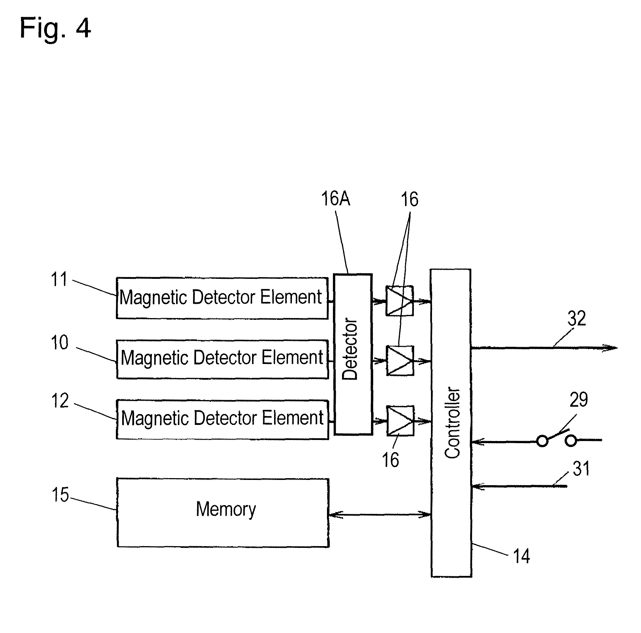

Fig. 4 is a circuit block diagram of rotation angle and torque detection device 6001. The sine-wave signals and the cosine-wave signals output from magnetic detector elements 11, 10 and 12 are supplied to controller 14, such as a microcomputer or a CPU, via detector 16A and amplifier 16. Processing the signals, controller 14 determines the absolute rotation angles of input shaft 2 and output shaft 5 and the torque. Nonvolatile memory 15, such as EEPROM, is connected to controller 14. Detector 16A detects whether or not the signals output from magnetic detector elements 10, 11 and 12 are within a predetermined range.

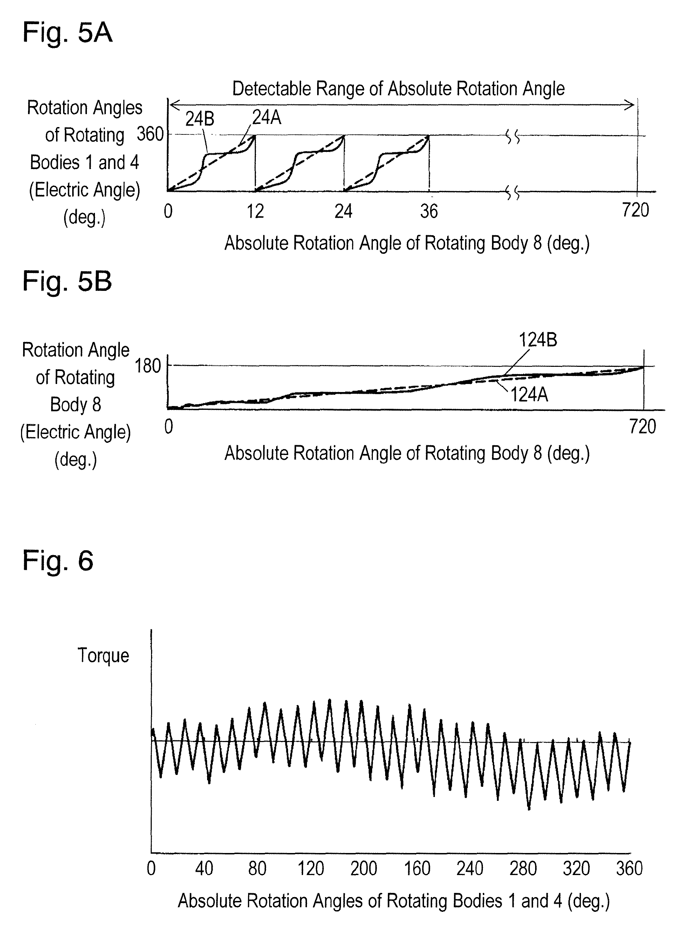

Fig. 5A shows a mechanical, absolute rotation angle (the horizontal axis) of each of input shaft 2 and output shaft 5, and the absolute rotation angle (the horizontal axis) of each of rotating bodies 1 and 4. The dotted line shows theoretical value 24A (identical to that in Fig. 2B) of the absolute rotation angle of each of rotating bodies 1 and 4. The solid line shows actual value 24B of the absolute rotation angle of each of rotating bodies 1 and 4.

Fig. 5B a mechanical, absolute rotation angle (the horizontal axis) of each of input shaft 2 and output shaft 5, and an absolute rotation angle (the horizontal axis) of each of rotating bodies 1 and 4. The dotted line shows theoretical value 124A (identical to that in Fig. 3B) of the absolute rotation angle of each of rotating bodies 1 and 4. The solid line shows actual value 124B of the absolute rotation angle of each of rotating bodies 1 and 4. The rotation angle (720 degrees in Fig. 5B) by which each of rotating bodies 1 and 2 rotates while rotating body 8 rotates at one turn is the upper limit of the rotation angle to be detected.

Fig. 6 shows torque-detecting characteristics of detection device 6001. The horizontal axis represents the absolute rotation angle of each of input shaft 2 and output shaft 5. The vertical axis represents a torque applied to torsion bar 7. A absolute rotation angle θx of rotating body 1, absolute rotation angle θy of rotating body 4, and spring constant T of torsion bar 7 express the torque as (θx•θy)×T.

A method of determining the torque applied to torsion bar 7. While Input shaft 2, torsion bar 7, and output shaft 5 which are connected to each other rotate, rotating body 1 which is fitted and coupled with input shaft 2 rotates accordingly. The rotation of rotating body 1 causes target 3 held with rotating body 1 to rotate. According to this rotation, magnetic detector element 11 facing target 3 detects magnetic field from magnetic poles 3A and 3B, and outputs a signal according to the detected magnetic field. Processing the signal, controller 14 determines absolute rotation angle θx of rotating body 1. The rotation of input shaft 2, torsion bar 7 and output shaft 5 causes rotating body 4 which is fitted and coupled with output shaft 5 to rotate. The rotation of rotating body 4 causes target 6 held with rotating body 4 to rotate. According to this rotation, magnetic detector element 12 facing target 6 detects magnetic field from magnetic poles 6A and 6B, and outputs a signal according to the magnetic field. Processing the signal, controller 14 multiplies spring constant T of torsion bar 7 by the difference between absolute rotation angles θx and θy of rotating body 4 as to determine the torque applied to torsion bar 7. This can increase the twisting angle of the bar for the torque applied to torsion bar 7, accordingly increasing the resolution of the torque to be detected.

A method of detecting the rotation angles of rotating bodies 1, 4 and 8 will be described below. Gear 1A of rotating body 1 is engaged with gear 8B of rotating body 8. That is, rotating body 1 rotates, and rotating body 8 accordingly rotates via the gears. Here, the number of the teeth of gear 1A of rotating body 1 is NA, and the number of the teeth of gear 8B of rotating body 8 is NB. Rotating body 8 rotates at a rotation speed NA/NB times as fast as rotating body 1 does. The numbers NA and NB are appropriately determined to allow rotating body 8 to rotate sufficiently slower than rotating body 1.

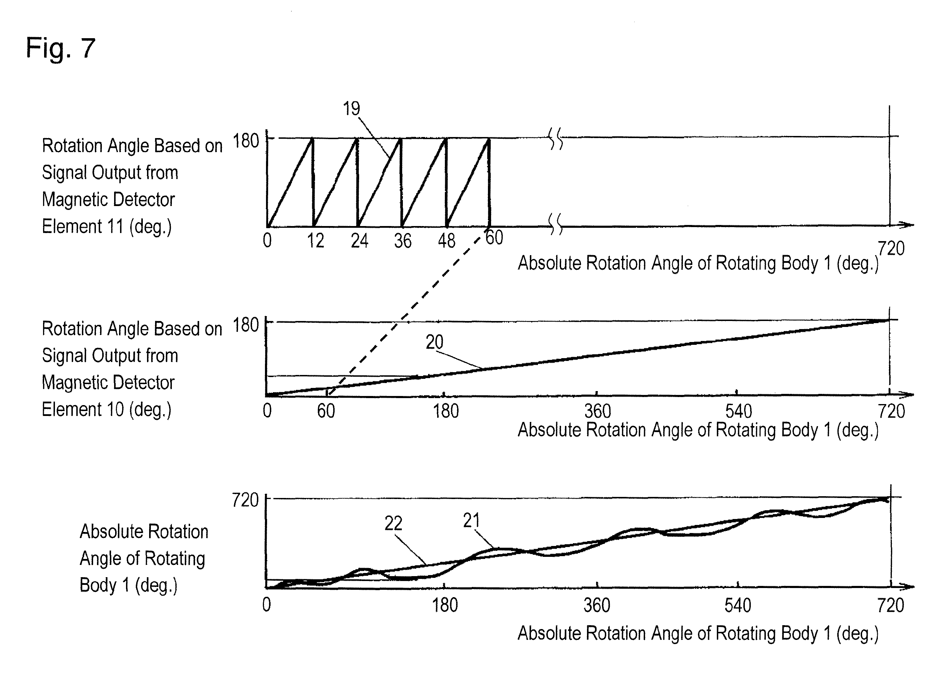

Magnetic field from magnetic poles 3A and 3B on rotating target 3 varies according to the rotation of rotating body 1. Magnetic detector element 11 detects the magnetic field and outputs a signal according to the detected magnetic field. Magnetic detector element 10 facing rotating body 8 having magnet 9 provided at center 8A thereof detects magnetic field from magnet 9, and outputs a signal according to the detected magnetic field. The output signals from magnetic detector elements 10 and 11 are supplied to controller 14, and are converted into digital signals by the A/D converter in controller 14. Controller 14 determines, based on the signal supplied from magnetic detector element 10, the rotation angle of rotating body 8 rotating from its initial position. Controller 14 detects, based on the signal supplied from magnetic detector element 11, the rotation angle of rotating body 1 precisely. Controller 14 roughly determines the absolute rotation angle of rotating body 1 based on the rotation angle of rotating body 8. Then, controller 14 corrects the roughly-determined absolute rotation angle based on the rotation angle of rotating body 1 determined from the signal output from magnetic detector element 11, thereby determining the absolute rotation angle of rotating body 1 exceeding one rotation. Fig. 7 shows a rotation angle and an absolute rotation angle of rotating body 1 determined by controller 14. In each of the three graphs of Fig. 7, the horizontal axis represents the absolute rotation angle of rotating body 1. Specifically, Fig. 7 shows rotation angle 19 obtained from the signal output from magnetic detector element 11, absolute rotation angle 20 obtained from the signal output from magnetic detector element 10, absolute rotation angle 21 which is determined, and theoretical absolute rotation angle 22. The graph showing rotation angle 19 obtained from the signal output from magnetic detector element 11 is enlarged within the range from 0 to 60 degrees of the absolute rotation angle on the horizontal axis compared with the other graphs.

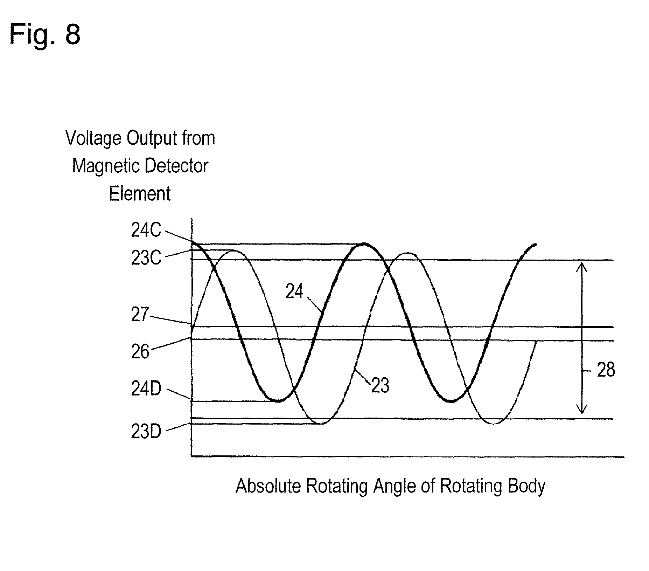

A method for by correcting variations in sensitivity of magnetic detector elements 10, 11, and 12 and variations in characteristics, such as a gain, of amplifier 16 to prevent an error of the determined absolute rotation angle will be described below with referring to Figs. 1, 4 and 8. Fig. 8 shows signals output from magnetic detector elements 10, 11 and 12.

Rotating body 1 rotates, and accordingly, target 3 rotates. According to the rotation of target 3, the magnetic field from magnetic poles 3A and 3B on rotating target 3 to be detected by magnetic detector element 11 varies. Magnetic detector element 11 outputs sine-wave signal 24 and cosine-wave signal 23 according to the magnetic field. Fig. 8 shows sibe-wave signal 24 and cosine-wabe signal 23. Signals 23 and 24 are amplified by amplifier 16 and supplied to controller 14. Controller 14 determines an arctangent signal from sine-wave signal 24 and cosine-wave signal 23. However, as shown in Fig. 8, amplitude center 27 of sine-wave signal 24 may not coincide with amplitude center 26 of cosine-wave signal 24 due to variations of characteristics of magnetic detector element 11 and amplifier 16. This may reduce the accuracy of the determined arctangent signal. Memory 15 stores respective sensitivities of magnetic detector elements 10, 11 and 12. Specifically, only while switch 24 is turned on to initiate a sensitivity-storing mode, rotating body 1 rotates so that rotating body 8 rotates by an angle greater than 180 degrees, and memory 15 stores maximum value 24C and minimum value 24D of sine-wave signal 24 and maximum value 23C and minimum value 23C of cosine-wave signal 23. Then, switch 29 is turned off to move to a normal operation mode to determine the calculate rotation angles. During that, controller 14 corrects sine-wave signal 24 and cosine-wave signal 23 as to cause maximum value 24C of sine-wave signal 24 and maximum value 23C of cosine-wave signal 23 to coincide with to the maximum value stored in memory 15, and to cause minimum values 24D and 23D to coincide with the minimum value in memory 15 to determine the arctangent signal and the rotation angles. That is, controller 14 corrects signals 23 and 24 according to the sensitivities of magnetic detector elements 10, 11 and 12 stored in memory 15, and determines the arctangent signal to obtain the rotation angles.

In the case that maximum values 24C and 23C and minimum values 24D and 23D of sine-wave signal 24 and cosine-wave signal 23 shown in Fig. 8 are out of proper range 28, a signal output from amplifier 16 may not change due to ambient temperature, or a required resolution of the signal cannot be obtained. To avoid the inconveniency, detector 16A determines whether or not maximum values 23C and 24C and minimum values 23D and 24D are within proper range 28. If detecting maximum values 23C and 24C and minimum values 23D and 24D are out of proper range 28, detector 16A may remove the signal out of the proper range. Alternatively, detector 16A may detect amplitude center 27 of sine-wave signal 24 and amplitude center 26 of cosine-wave signal 23, and determine whether or not amplitude centers 27 and 26 are within proper range 28. If detecting that amplitude center 26 or 27 is out of proper range 28, detector 16A may remove the signal having the amplitude center out of the proper range. Further, alternatively, controller 14 may compare amplitude center 27 of sine-wave signal 24 with amplitude center 26 of cosine-wave signal 23. Controller 14 may correct sine-wave signal 24 and cosine-wave signal 23, such that amplitude center 27 coincides with amplitude center 26, as to be prevented from outputting incorrect signals due to variations in characteristics of magnetic detector elements 10, 11, and 12 and amplifier 16. Controller 14 may determine the average of the amplitude centers at plural times to finally determine amplitude centers 26 and 27. This operation prevents the incorrect signal output more accurately. Controller 14 may determine the average without values 23C, 24C, 23D, or 24D. This operation prevents the incorrect signals more accurately.

Memory 15 may store signals supplied from magnetic detector elements 11 and 10 when rotating body 1 is located at a predetermined position. This operation allows controller 14 to detect an absolute rotation angle from the predetermined position. Controller 14 may receive, via position-determining signal line 31 shown in Fig. 4, a signal indicating that the signals output from magnetic detector elements 10 and 11 correspond to the predetermined position. This operation allows controller 14 to determine the position without mechanical operation. In this case, controller 14 may read the signal plural times to check the signal, or eth signal may be transmitted as a serial signal. These operations allow controller 14 to remove incorrect signals, such as noise. Position-determining signal line 31 and output signal line 32 may be implemented by a common terminal by switching the common terminal.

### EXEMPLARY EMBODIMENT 2

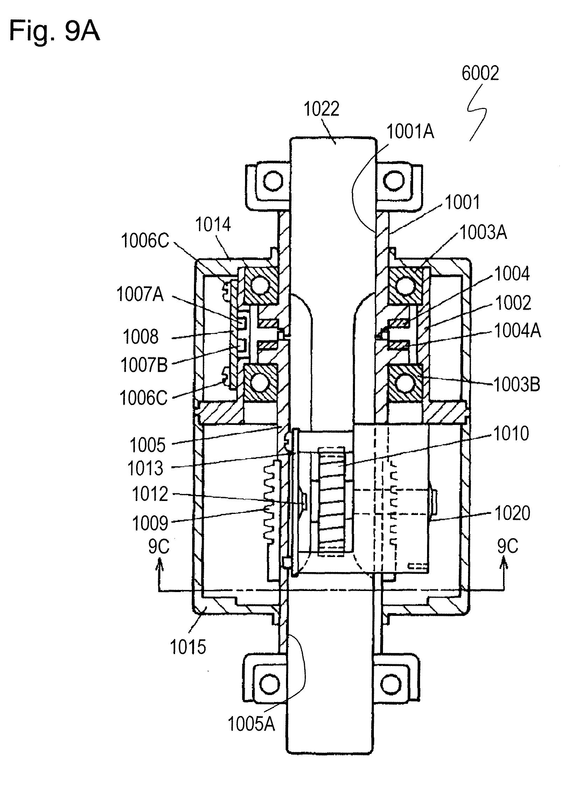

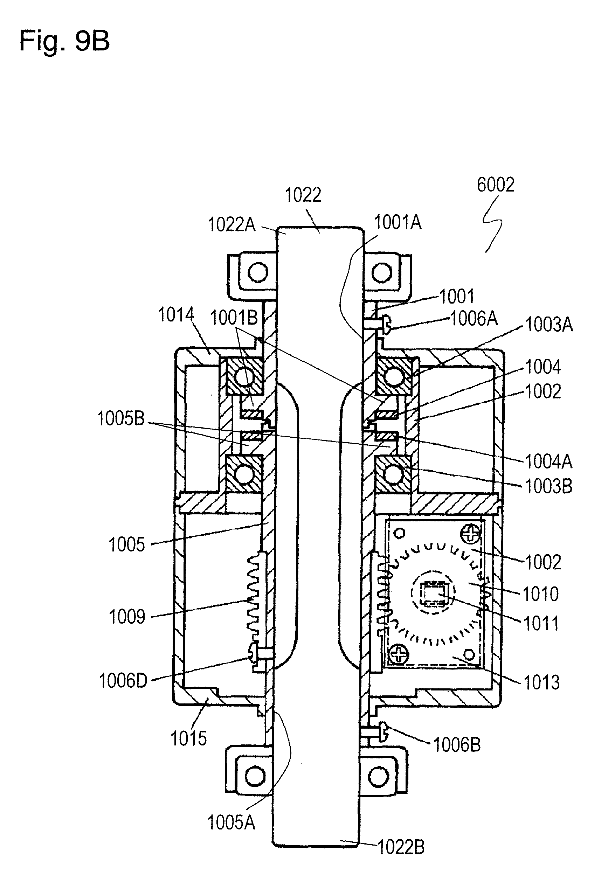

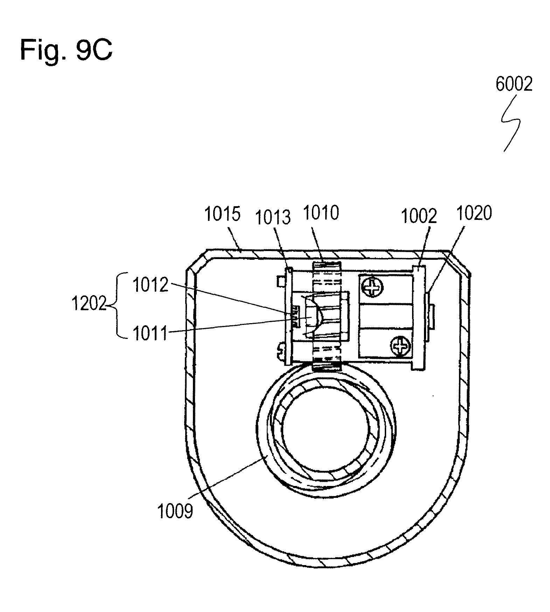

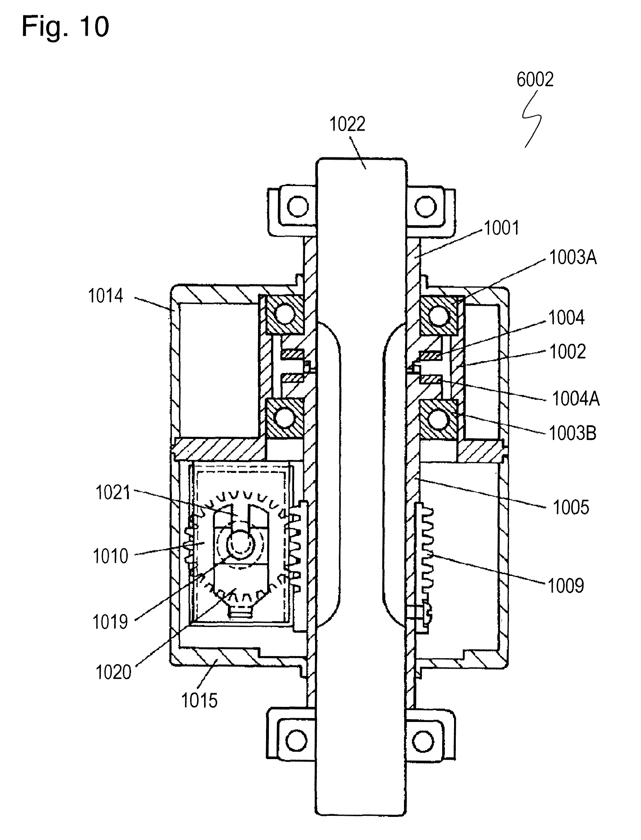

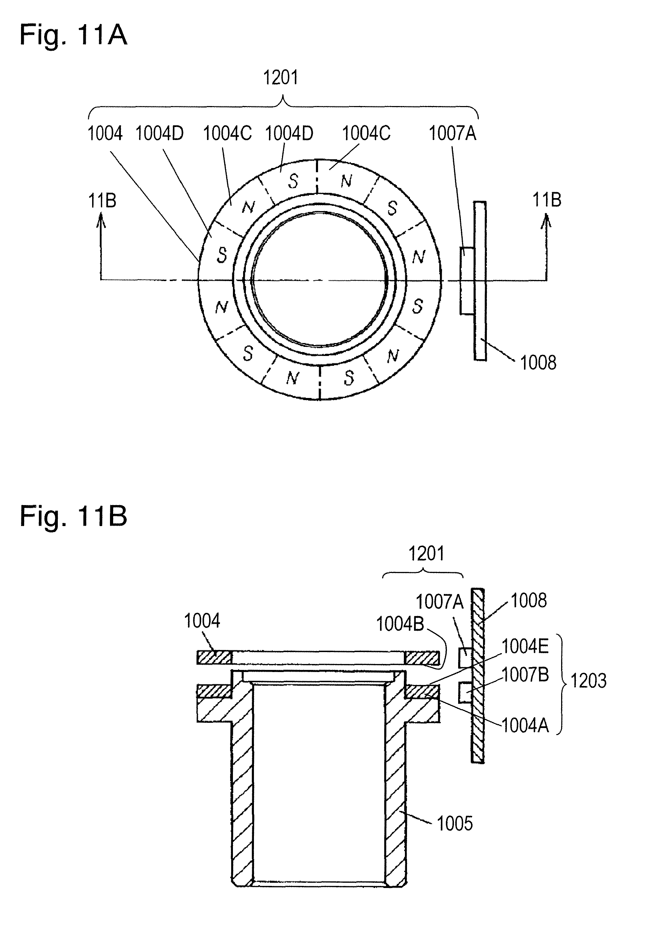

Fig. 9A is a front sectional view of rotation angle and torque detection device 6002 in accordance with Exemplary Embodiment 2 of the present invention. Fig. 9B is a side sectional view of the detection device. Fig. 9C is a sectional view of detection device 6002 at line 9C-9C shown in Fig. 9A. Fig. 10 is a side sectional view of detection device 6002. Fig. 11A shows ring magnets 4 and magnetic detector elements 7A and 7B. Fig. 11B is a sectional view of ring magnets 4 and 4A and magnetic detector elements 7A and 7B at line 11B-11B shown in Fig. 11A.

Rotating body 1001 made of non-magnetic material, such as metal or resin, has a pipe shape having through-hole 1001A. Rotating body 1001 is supported rotatably on the inner periphery of bearing 1003A fixed to housing 1002 made by, for example, aluminum die-casting. Rotating body 1001 has projection 1001B extending outward. Magnet 1004 having a ring shape is fixed to projection 1001B. As shown in Fig. 11A, ring magnet 1004 has plural magnetic poles 1004C and 1004D that are magnetized in a radial direction of the ring shape and in a direction perpendicular to rotating body 1001. Rotating body 1005 has a pipe shape having through-hole 1005A coaxial to rotating body 1001. Rotating body 1005 is supported rotatably on bearing 1003B fixed to housing 1002. Similarly to rotating body 1001, rotating body 1005 has projection 1005B. Ring magnet 1004A having plural magnetic poles, similarly to ring magnet 4, is fixed to projection 1005B. Rotating bodies 1001 and 1005 rotate independently from each other. Torsion bar 1022 is provided in through-hole 1001A of rotating body 1001 and through-hole 1005A of rotating body 1005. Torsion bar 1022 rotates according to the rotation of a steering system of a vehicle.

Rotating body 1001 is fixed with screw 1006A to input shaft 1022A of torsion bar 1022 inserted in through-hole 1001A. Similarly, rotating body 1005 is fixed with screw 1006B to output shaft 1022B of torsion bar 1022. As shown in Figs. 11A and 11B, magnetic detector elements 1007A and 1007B, such as magnetic resistance (MR) elements, are provided on printed circuit board 1008 as to face magnet ring 1004 and second magnet ring 1004A, respectively. Printed circuit board 1008 is fixed onto housing 1002 with screws 1006C. Gear 1009 is fixed to rotating body 1005 with screw 1006D. Gear 1009 is engaged with gear 1010. The number of the teeth of each of gears 1009 and 1010 is determined to provide a predetermined speed-reducing ratio defined by the maximum of rotations of torsion bar 1022. Rotating magnet 1011 is attached on an edge of gear 1010 and rotates together with gear 1010. Magnetic detector element 1012 is mounted on auxiliary printed circuit board 1013 and faces rotating magnet 1011. Auxiliary printed circuit board 1013 is attached on housing 1002. These components are accommodated in upper case 1014 and lower case 1015.

An operation of detection device 6002 having the above structure will be described below.

As torsion bar 1022 rotatable according to the rotation of the steering wheel rotates, rotating body 1001 fixed to input shaft 1022A of torsion bar 1022 rotates. According to the rotation of rotating body 1001, magnetic field which is supplied from magnetic poles 1004C and 1004D of ring magnet 1004 fixed to rotating body 1001 to magnetic detector element 1007A varies. That is, the magnetic field received by magnetic detector element 1007A varies according to the rotation angle of input shaft 1022A of torsion bar 1022. Magnetic detector element 1007A outputs a signal according to the magnetic field, thus allowing the rotation angle of torsion bar 1022, i.e., the steering wheel to be detected.

Torsion bar 1022 rotates, and accordingly, rotating body 1005 fixed to output shaft 1022B of torsion bar 1022 rotates. As rotating body 1005 rotates, magnetic field supplied from the magnetic poles of ring magnet 1004A fixed to rotating body 1005 to magnetic detector element 1007B varies. That is, the magnetic field received by magnetic detector element 1007B varies according to the rotation angle of output shaft 1022B of torsion bar 1022. Magnetic detector element 1007B outputs a signal according to the magnetic field, thus allowing the rotation angle of output shaft 1022B torsion bar 1022 to be detected. Magnetic detector element 1007A and ring magnet 1004 having magnetic poles 1004C and 1004D provide rotation angle detector 1201 for detecting the rotation angle of rotating body 5. Similarly, magnetic detector element 1007B and ring magnet 1004A having the magnetic poles provide rotation angle detector 1203 for detecting the rotation angle of rotating body 1001. Magnetic detector element 1012 and rotating magnet 1011 provide rotation angle detector 1202 for detecting the rotation angle of gear 1010.

Upon receiving a torque, torsion bar 1022 is twisted. A twisting angle of torsion bar 1022 is proportionate to the difference between the rotation angle detected by magnetic detector element 1007A and the rotation angle detected by magnetic detector element 1007B. Therefore, the torque applied to torsion bar 1022 is detected based on the difference between these rotation angles.

The rotation of torsion bar 1022 is transmitted from gear 1009 to gear 1010 at a predetermined speed-reducing ratio. The speed-reducing ratio may be determined appropriately, so that rotation magnet 1011 of gear 1010 rotates less than one rotation even when torsion bar 1022 rotates more than one turn (generally, four to six turns). Magnetic detector element 1012 detects the rotation angle of rotation magnet 1011, thereby allowing an absolute rotation angle torsion bar 1022 and rotating bodies 1001 and 1005 more than one turn. Gears 1009 and 1010 provide a speed-reducing gear train. The gear train may include a worm gear and a pinion gear, and has a small size and a large speed-reducing ratio, accordingly providing detection device 6001 with a smaller size and a simpler structure than a gear train including a spur gear and a planetary gear. That is, detection device 6001 having a simple structure and a small size detects the torque and the absolute rotation angle of torsion bar 1022.

Ring magnets 1004 and 1004A are magnetized, as shown in Fig. 11A, and produce a uniform magnet field, thereby allowing detection device 6001 to detect the rotation angle accurately.

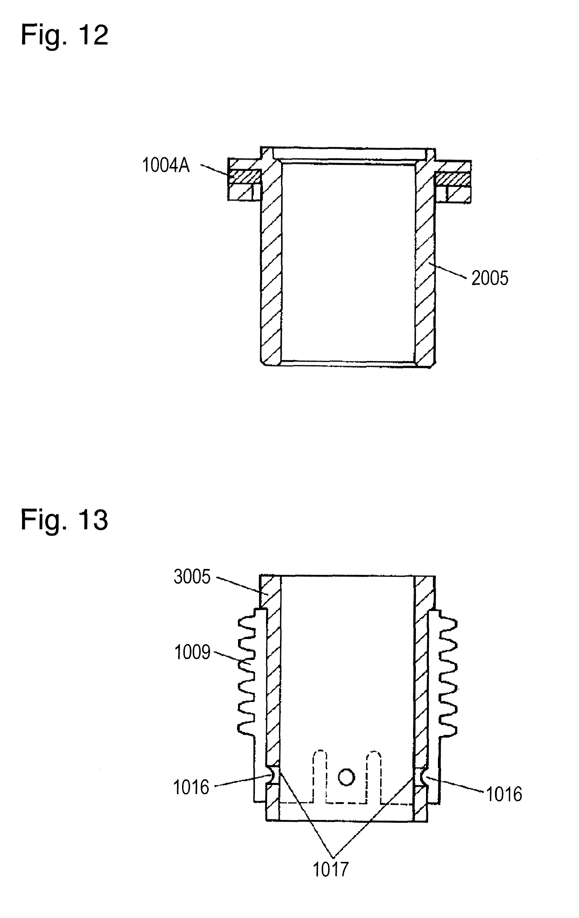

Fig. 12 is a sectional view of another rotating body 2005 which can be used instead of rotating body 1005 in accordance with Embodiment 2. Ring magnets 1004 and 1004A are fixed to rotating bodies 1001 and 1005 shown in Fig. 11B generally by adhesive bonding or attaching, respectively. This adhesive bonding and attaching may reduce accuracy of detection and increase production processes. Rotating body 2005 shown in Fig. 12 is made of resin and unitarily formed with ring magnet 1004A by insert molding. This process not only allows ring magnet 1004A to be mounted accurately, but also reduces manufacturing processes and the number of components.

Fig. 13 is a sectional view of still another rotating body 3005 which can be used instead of rotating body 1005 in accordance with Embodiment 2. Worm gear 1009 is made of elastic resin, such as polyoxymethylene (POM). Gear 1009 has a projection 1016 on a cylindrical surface that is attached onto rotating body 3005. Rotating body 3005 has recess 1017 provided in a surface thereof contacting gear 1009. Projection 1016 of gear 1009 is inserted elastically in recess 1017 of rotating body 3005, thereby being fixed to rotating body 3005 securely and easily.

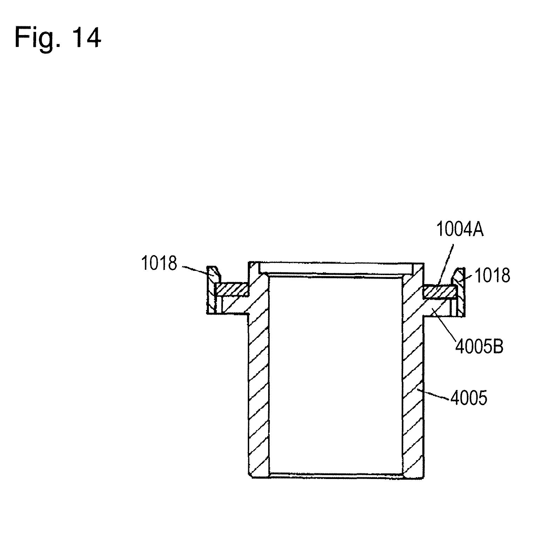

Fig. 14 is a sectional view of further rotating body 4005 which can be used instead of rotating body 1005 in accordance with Embodiment 2. Rotating body 4005 is made of resin. Plural pawls 1018 are provided on projection 4005B of rotating body 4005 as to fix ring magnet 1004A to projection 4005B. The structure eliminates the process of attaching ring magnet 1004 to the rotating body, thus simplifying the manufacturing process of detection device 6002.

A worm gear, being used as gear 1009, rotates and generates a thrust in a direction of rotating axis of gear 1010, a pinion gear. The thrust may have the engagement between the gears deviate, accordingly reducing accuracy of the rotation of gear 1010. In order to avoid the reducing of the accuracy, as shown in Fig. 10, groove 1019 is provided in the shaft of gear 1010. A notch having a substantially U-shape provided in leaf spring 1020 fixed to housing 1002 is engaged with groove 1019. Leaf spring 1020 constantly generates an elastic force in the axial direction of gear 1010, thereby allowing gear 1009 to contact gear 1010 constantly. This structure allows magnetic detector element 1012 to detect the rotation of rotating body 1005 accurately.

Ring magnets 1004 and 1004A are magnetized in radial directions of rotating bodies 1001 and 1005 perpendicular to the rotation axes of rotating bodies 1001 and 1005, respectively. Magnetic detector elements 1007A and 1007B are placed in the radial directions of rotating body, respectively. Ring magnets 1004 and 1004A may be arranged in thickness directions parallel to the rotation axes of rotating bodies 1001 and 1005, respectively, under conditions, such as outer dimensions of detection device 6002. In this case, magnetic detector elements 1007A and 1007B face surface 1004B of magnet ring 1004 and surface 1004E of magnet ring 1004A, respectively, as shown in Fig. 11B.

### EXEMPLARY EMBODIMENT 3

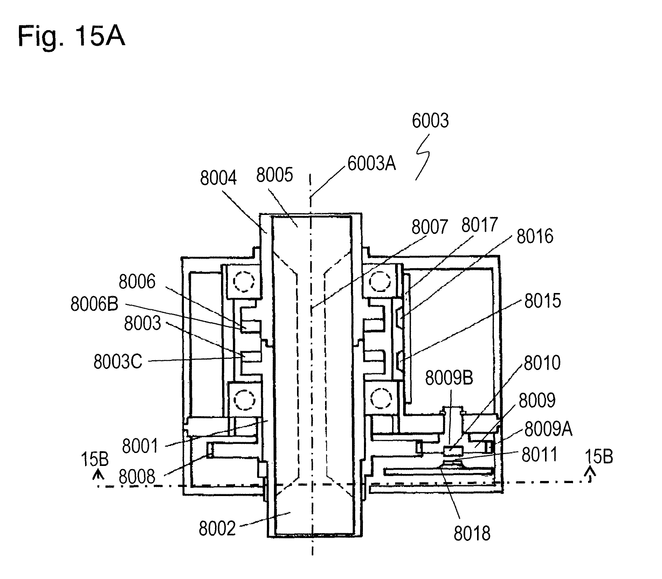

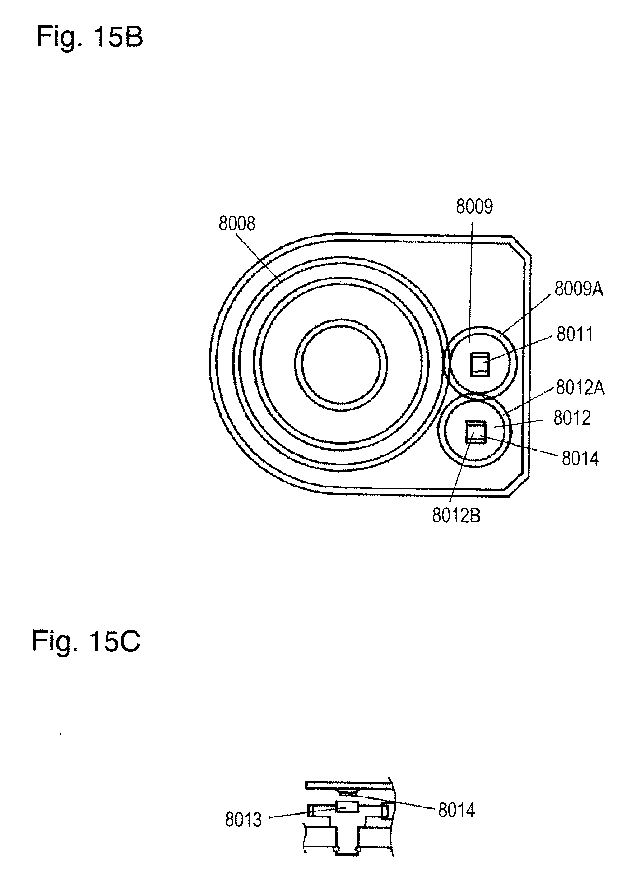

Fig. 15A is a schematic view of rotation angle and torque detection device 6003 in accordance with Exemplary Embodiment 3 of the present invention. Fig. 15B is a sectional view of detection device 6003 at line 15B-15B shown in Fig. 15A. Fig. 15C is a sectional view of an essential part of detection device 6003. Rotating body 8001 is engaged and coupled with input shaft 8002, and can rotate plural turns. Target 8003 is fixed to rotating body 8001. Similarly to detection device 6001 of Fig. 1, magnetic poles having polarities different from each other are alternately arranged at equal intervals on outer periphery 8003C of target 8003. Rotating body 8004 is engaged with output shaft 8005 and can rotate plural turns. Target 8006 is fixed to rotating body 8004. Similarly to detection device 6001 shown in Fig. 1, magnetic poles having polarities different from each other are alternately arranged at equal intervals on outer periphery 8006B of target 8006. Torsion bar 8007 is arranged between input shaft 8002 and output shaft 8005 along coaxial line 6003A, and is fixed to input shaft 8002 and output shaft 8005. Gear 8008 is fixed to rotating body 8001. Gear 8009A engaged with gear 8008 is fixed to rotating body 8009. Magnet 8010 is placed at center 8009B of rotating body 8009. Magnetic detector element 8011 faces magnet 8010 and outputs a signal according to magnetic field from magnet 8010. Gear 8012A engaged with gear 8009A of rotating body 8009 is fixed to rotating body 8012. Magnet 8013 is provided at center 8012B of rotating body 8012. Magnetic detector element 8014 faces magnet 8013 and outputs a signal according to magnetic field from magnet 8013. Magnetic detector element 8015 faces the magnetic poles of target 8003 and outputs a signal according to magnetic field from the magnetic poles. Magnetic detector element 8016 faces the magnetic poles of target 8006 and outputs a signal according to magnetic field from the magnetic poles. Magnetic detector elements 8015 and 8016 are mounted onto circuit board 8017. Magnetic detector elements 8011 and 8014 are mounted onto circuit board 8018.

The number of the magnetic poles of target 8003 is determined to be identical to that of the magnetic poles of target 8006. The number of the magnetic poles is determined by a maximum torque to be detected and a spring constant of torsion bar 8007. For example, in the case that the maximum torque is ±8N• m and the spring constant of torsion bar 8007 is 2N • m/deg, the maximum twisting angle of torsion bar 8007 is ±4 degrees. The number of the magnetic poles of target 8003 is determined to be thirty (N-poles: 15, S-poles: 15). The number of the magnetic poles of target 8006 is determined to be thirty (N-poles: 15, S-poles: 15). In this case, magnetic poles adjacent to each other by an angular interval of 12 degrees. The maximum twisting angle of torsion bar 8007 is ±4 degrees, hence preventing the difference between the absolute rotation angles of rotating bodies 8001 and 8004 from exceeding 8 degrees. The magnetic poles of targets 8003 and 8006 allow a torque applied to torsion bar 8007 to be detected accurately.

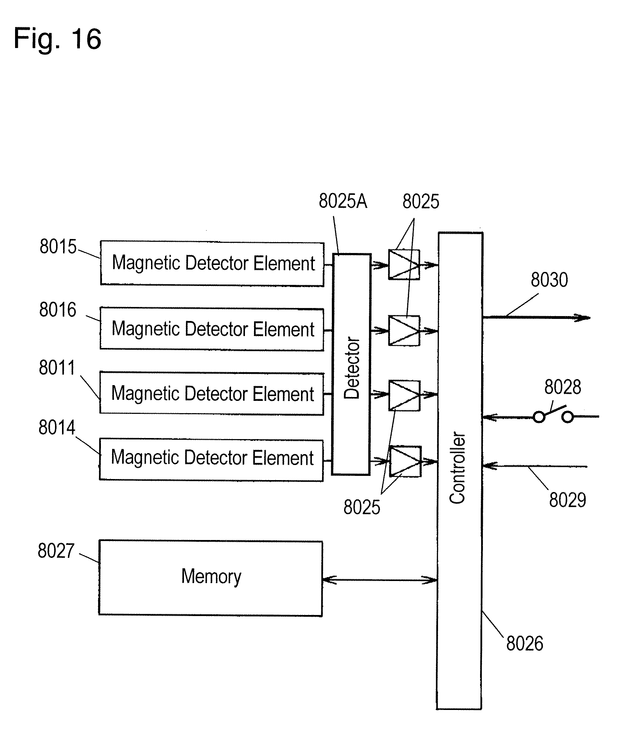

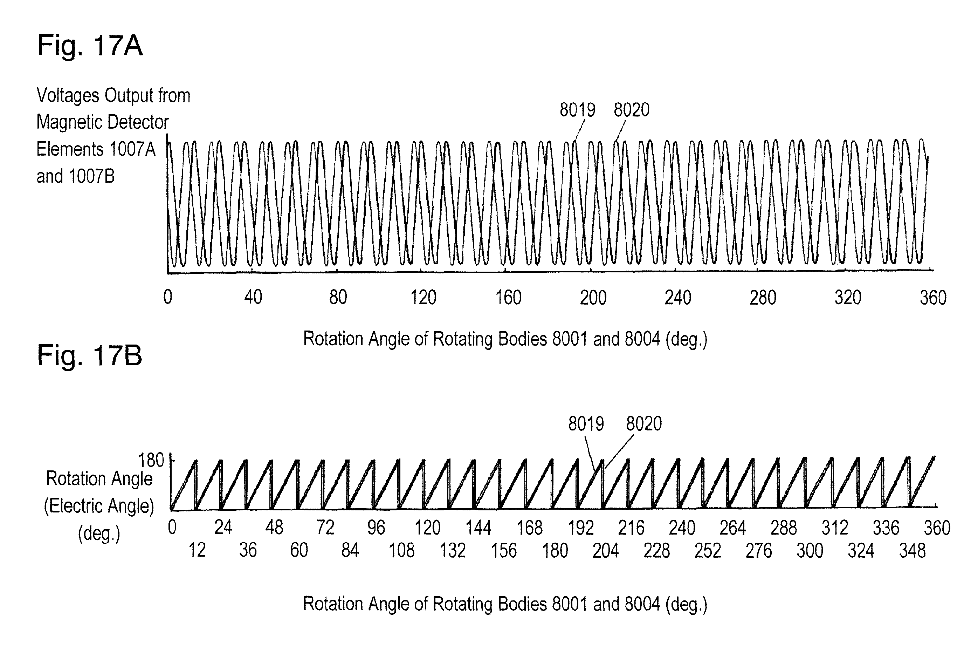

An operation of detection device 6003 including magnetic resistance (MR) elements as magnetic detector elements 8015, 8016, 8011 and 8014 will be described below. Fig. 16 is a circuit block diagram of detection device 6003. Based on magnetic field from the magnetic poles and the magnets, the magnetic detector elements output sine-wave signals and cosine-wave signals corresponding to the rotation angles of the rotating bodies. Upon detecting magnetic field from the magnetic poles of rotating target 8003 and target 8006, magnetic detector elements 8015 and 8016 output one cycle of the sine-wave signal and one cycle of the cosine-wave signal per magnetic pole, respectively. That is, magnetic detector element 8015 outputs cycles of each of the sine-wave signal and the cosine-wave signal of which number is identical to the number of the magnetic poles of target 8003 during one rotation of rotating body 8001. Magnetic detector element 8016 outputs cycles of each of the sine-wave signal and the cosine-wave signal of which number is identical to the number of the magnetic poles of target 8006 during one rotation of rotating body 8004. The signals output from the magnetic detector elements are amplified by amplifier 8025 as to have predetermined amplitudes, and then are supplied to controller 8026, such as a CPU. The signals are converted by an A/D converter in controller 8026 into digital signals. Controller 8026 processes the digital signals to determine the rotations of target 8003 and 8006, i.e., the absolute rotation angles of rotating bodies 8001 and 8004 to output of the absolute rotation angles via output signal line 8030. Fig. 17A shows the absolute rotation angle (the horizontal axis) of each of rotating bodies 8001 and 8004, and sine-wave signal 8019 and cosine-wave signal 8020 (the vertical axis) output from each of the magnetic detector elements. Fig. 17B shows the absolute rotation angle (the horizontal axis) of each of rotating bodies 8001 and 8004, and the absolute rotation angle (the vertical axis) of each of rotating bodies 8001 and 8004 in processing in controller 8026.

Gear 8009A of rotating body 8009 is engaged with gear 8008. According to the rotation of rotating body 8008, rotating body 8009 rotates at a speed provided by multiplying the rotation speed of rotating body 8008 by the ratio of the number of the teeth of gear 8009A to that of gear 8008.

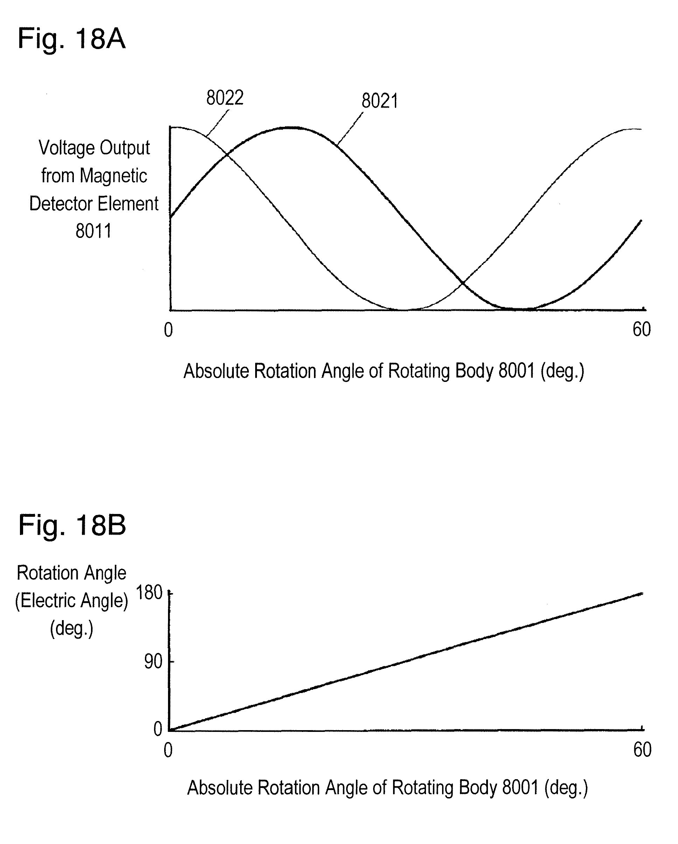

Magnetic detector element 8011 detects the magnetic field from magnet 8010 situated at center 8009B of rotating body 8009. A half turn of magnet 8010 causes magnetic detector element 8011 to output one cycle of each of sine-wave signal 8019 and cosine-wave signal 8020. Processing these signals, controller 8026 determines the absolute rotation angle of rotating body 8009. Fig. 18A shows the absolute rotation angle (the horizontal axis) of rotating body 8001, and sine-wave signal 8021 and cosine-wave signal 8022 output from magnetic detector element 8011. Fig. 18B shows the absolute rotation angle (the horizontal axis) of rotating body 8001, and the rotation angle (the horizontal axis) of rotating body 8009 in process, i.e., the phase of each of the sine-wave signal and the cosine-wave signal.

Gear 8012A is fixed to rotating body 8012 and engaged with gear 8009A of rotating body 8009. According to the rotation of rotating body 8001, rotating body 8012 rotates at a speed determined by the ratio of the numbers of teeth of gears 8008, 8009A and 8012A.

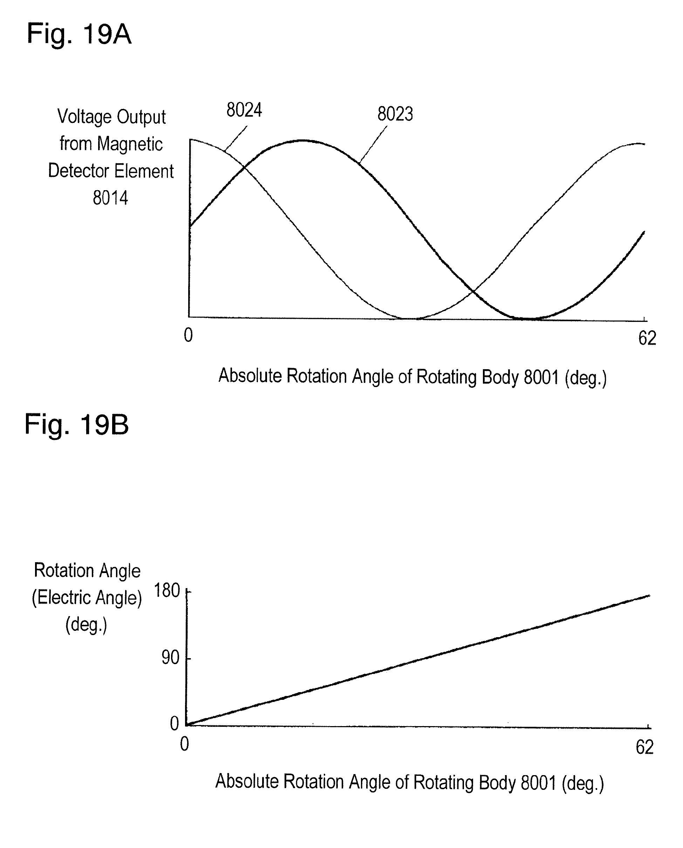

Magnetic detector element 8014 detects magnetic field from magnet 8013 situated at center 8012B of rotating body 8012. A half turn of magnet 8013 causes magnetic detector element 8014 to output one cycle of each of a sine-wave signal and a cosine-wave signal. Processing the signals, controller 8026 determines the absolute rotation angle of rotating body 8012. Fig. 19A shows the absolute rotation angle (the horizontal axis) of rotating body 8001, and voltages (the vertical axis) of sine-wave signal 8023 and cosine-wave signal 8024 output from magnetic detector element 8014. Fig. 19B shows the absolute rotation angle (the horizontal axis) of rotating body 8001, and the phase (the vertical axis) of each of sine-wave signal 8023 and cosine-wave signal 8024, i.e., the rotation angle of rotating body 8012 in process.

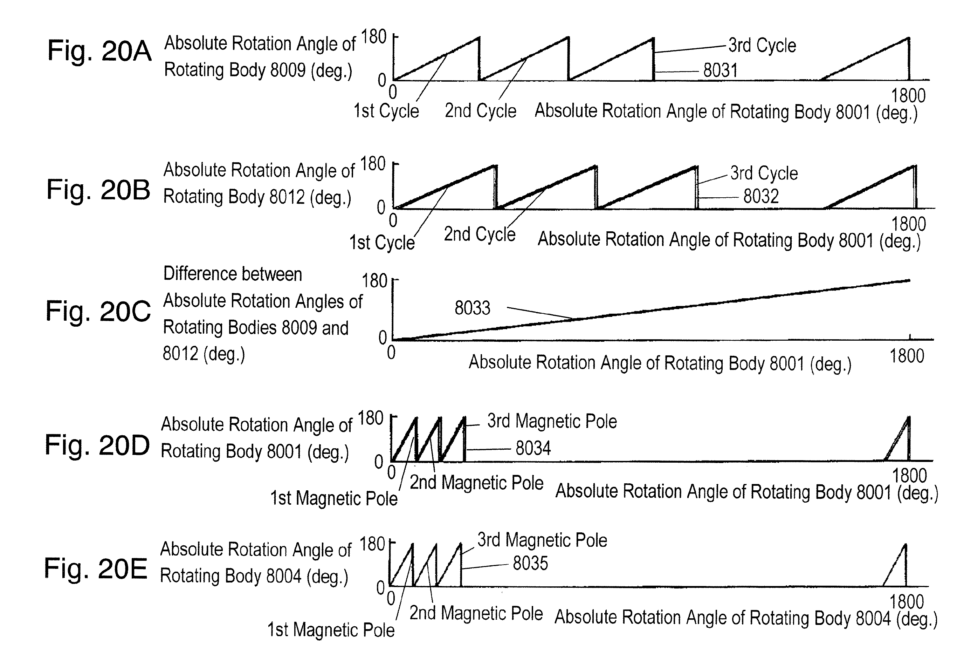

Fig. 20A shows the absolute rotation angle (the horizontal axis) of rotating body 8001, and the rotation angle (the vertical axis) of rotating body 8009. Fig. 20B shows the absolute rotation angle (the horizontal axis) of rotating body 8001, and the rotation angle (the vertical axis) of rotating body 8012. Since the number of the teeth of gear 8009A of rotating body 8009 is different from that of gear 8012A of rotating body 8012, the cycle of the rotation of rotating bodies 8009 with respect to the absolute rotation angle of rotating body 8001 is different from the cycle of the rotation of rotating body 8012 with respect to the absolute rotation angle of rotating body 8001. Fig. 20C shows the absolute rotation angle (the horizontal axis) of rotating body 8001, and the difference (the vertical axis) between the rotation angles of rotating bodies 8009 and 8012. Fig. 20D shows the absolute rotation angle (the horizontal axis) of rotating body 8001, and the rotation angle determined based on the signal output from magnetic detector element 8015, that is, the phase of sine-wave signal 8019. Fig. 20E shows the absolute rotation angle (the horizontal axis) of rotating body 8004 engaged with output shaft 8005, and the rotation angle determined based on the sine-wave signal output from magnetic detector element 8016, that is, the phase of the sine-wave signal.

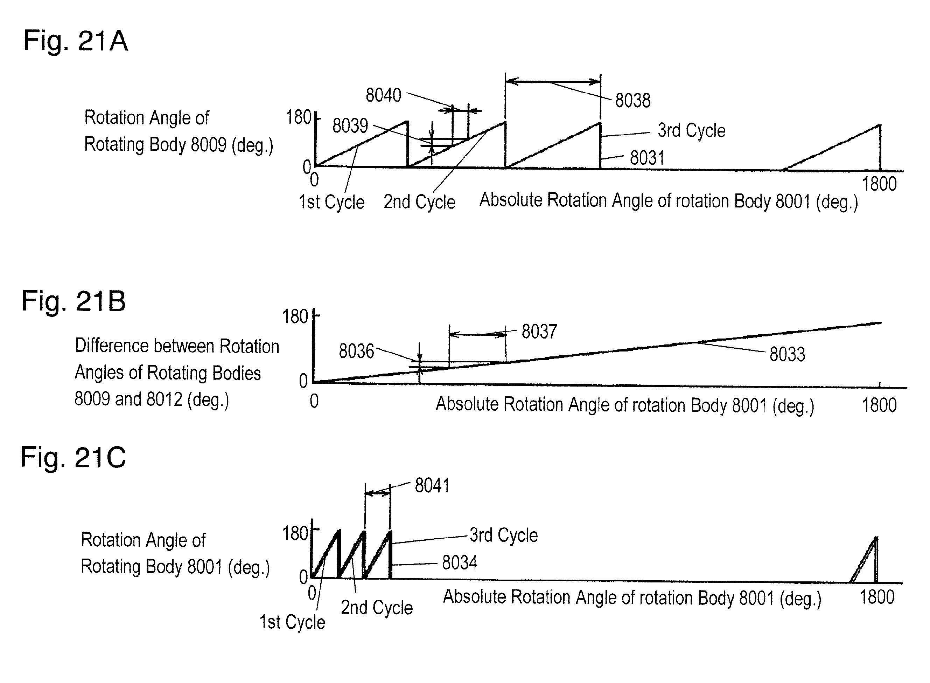

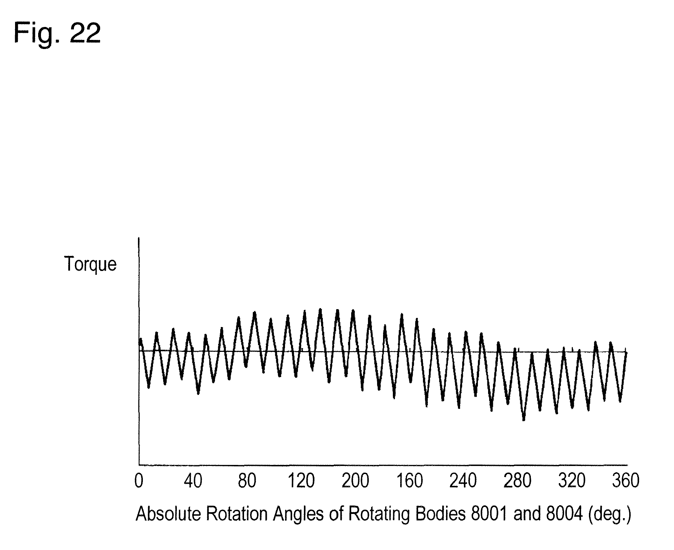

Figs. 21A to 21C illustrate influence of the difference between the rotation angles of rotating bodies 8009 and 8012 to the absolute rotation angle of rotating body 8001. Fig. 21A shows the absolute rotation angle (the horizontal axis) of rotating body 8001 and the rotation angle (the vertical axis) of rotating body 8009. Fig. 21B shows the absolute rotation angle (the horizontal axis) of rotating body 8001 and the difference (the vertical axis) of the rotation angles of rotating bodies 8009 and 8012. Fig. 21C shows the absolute rotation angle (the horizontal axis) of rotating body 8001 and the rotation angle (the vertical axis) of rotating body 8001 determined based on sine-wave signal 8019 and cosine-wave signal 8020 output from magnetic detector element 8015, that is, the phase of signal 8019 and signal 8020. Fig. 22 shows torque-detecting characteristics of detection device 6003. The horizontal axis represents the absolute rotation angle of each of input shaft 8002 and output shaft 8005, the vertical axis represents the torque applied to torsion bar 8017. Absolute rotation angle θx of rotating body 8001, absolute rotation angle θy of rotating body 8004, and spring constant T of torsion bar 8007 express the torque as (θx•θy)×T.

Next, a method of determining the torque applied to torsion bar 8007 will be described. Input shaft 8002, torsion bar 8007, and output shaft 8005 which are connected to each other rotate, and accordingly, rotating body 8001 which is engaged and coupled with input shaft 8002 rotates. According to the rotation of rotating body 8001, target 8003 held by rotating body 8001 rotates. This rotation causes magnetic detector element 8015 facing the magnetic poles of rotating target 8003 to output a signal according to magnetic field from the magnetic poles. Processing the signal, controller 8026 determines the absolute rotation angle of rotating body 8001. Input shaft 8002, torsion bar 8007, and output shaft 8005 rotates, and accordingly, rotating body 8004 which is engaged and coupled with output shaft 8005 rotates. According to the rotation of rotating body 8004, target 8006 held by rotating body 8004 rotates. This rotation causes magnetic detector element 8016 facing the magnetic poles of rotating target 8006 to output a signal according to magnetic field from the magnetic poles. Processing the signal, controller 8026 determines the absolute rotation angle of rotating body 8004. Controller 14 determines the difference between the rotation angles of rotating bodies 8001 and 8004, and multiplies the difference by the spring constant of torsion bar 8007 as to determine the torque. Fig. 20D shows rotation angle 8034 of rotating body 8001 determined by controller 8026 based on the signal output from magnetic detector element 8015. Fig. 20E shows rotation angle 8035 of rotating body 8004 determined by controller 8026 based on the signal output from magnetic detector element 8016. As described above, the torque shown in Fig. 22 is obtained from the difference between rotation angle 8034 and rotation angle 8035.

Next, a method of detecting the absolute rotation angles of the rotating bodies will be described.

Gear 8008 fixed to rotating body 1 rotates, and accordingly, rotating body 8009 rotates via gear 8009A engaged with gear 8008. Simultaneously, rotating body 8012 rotates via gear 8012A engaged with gear 8009A of rotating body 8009. Based on the number NA of eth teeth of gear 8008, the number NB of the teeth of gear 8009A, and the number NC of the teeth of gear 8012A, rotating body 8009 rotates at a rotation speed NA/NB times as fast as rotating body 8008. Rotating body 8012 rotates at a rotation speed NA/NC times as fast as rotating body 8008. The numbers NA, NB and NC may be appropriately determined to allow the absolute rotation angle of rotating body 8001 to be determined based on the difference between rotation angles of rotating bodies 8009 and 8012.

Magnetic detector element 8011 facing magnet 8010 placed at center 8009B of rotating body 8009 detects magnetic field from magnet 8010 while rotating body 8009 rotates. Magnetic detector element 8014 facing magnet 8013 provided at center 8012B of rotating body 8012 detects magnetic field from magnet 8013 while rotating body 8012 rotates. Signals output from magnetic detector elements 8011 and 8014 are supplied to controller 8026 and converted into digital signals by an A/D converter in controller 26 to be processed. Controller 8026 determines the rotation angles of rotating bodies 8009 and 8012 based on the signals output from magnetic detector elements 8011 and 8014. Controller 8026 determines the difference between the determined rotation angles, and determines a rough absolute rotation angle of plural turns of rotation of rotating body 8001 based on the difference. Then, controller 8026 determines the rotation angle of rotating body 8009 based on the signal output from magnetic detector element 8011. Controller 8026 corrects the rough absolute rotation angle of rotating body 8001 by a rotation angle determined based on the rotation angle of rotating body 8009, thereby determining the absolute rotation angle of plural turns of the rotation of rotating body 8001 accurately. Fig. 20A shows rotation angle 8031 of rotating body 8009 determined based on the signal output from magnetic detector element 8011. Fig. 20B shows rotation angle 8032 of rotating body 8012 determined based on the signal output from magnetic detector element 8014. Fig. 20C shows difference 8033 between the rotation angles of rotating bodies 8009 and 8012 determined based on the signals output from magnetic detector elements 8011 and 8014.

Next, a method of detecting the rotation angle of the rotating body more accurately will be described.

Fig. 21B shows difference 8033 between the rotation angles of rotating bodies 8009 and 8012 determined based on the signals output from magnetic detector elements 8011 and 8014. The detected rotation angles of rotating bodies 8009 and 8012 include mechanical errors and errors caused by components and a circuit, accordingly causing difference 8033 of rotating bodies 8009 and 8012 to include detection error 8036. The rotation angle of rotating body 8001 determined based on difference 8033 including detection error 8036 includes detection error 8037. A wider detection range of the absolute rotation angle of rotating body 8001 provides difference 8033 with a smaller gradient, accordingly increasing influence of detection error 8036 included in difference 8033 to detection of the absolute rotation angle of rotating body 8001. If detection error 8037 of the absolute rotation angle of rotating body 8001 is smaller than detection cycle of the rotation angle of rotating body 8001, the position of detection cycle 8041 within the detection range of the absolute rotation angle of rotating body 8001 is determined based on difference 8033. In detection device 6003, the detection range of difference 8033 between the rotation angles of rotating bodies 8009 and 8012 is narrow to reduce detection error 8037. Detection error 8037 of the absolute rotation angle of rotating body 8001 is smaller than detection cycle 8038 of the rotation angle of rotating body 8009 as to allow the position of detection cycle 8038 within the detection range of the absolute rotation angle of rotating body 8001 to be determined based on difference 8033. The range of the rotation angle of rotating body 8001 detected by magnetic detector element 8011 is narrow, and accordingly, absolute rotation angle 8031 has a steep gradient. That is, detection error 8040 of the absolute rotation angle of rotating body 8001 corresponding to detection error 8039 of the rotation angle of rotating body 8009 can be smaller than detection cycle 8041 of the absolute rotation angle of rotating body 8001. According to this arrangement, the position of absolute rotation angle 8034 within the detection range of the absolute rotation angle of rotating body 8001 can be determined based on absolute rotation angle 8031. The detection device according to this embodiment can detect the rotation angle of rotating body 8001 accurately without changing the detection range of difference 8033.

Next, a method of finding an abnormal condition of detection device 6003 by monitoring the absolute rotation angles of rotating bodies 8001 and 8004 will be described with referring to Figs. 15, 17A, 17B, and 20A to 20E.

In Fig. 15, according to the rotation of rotating body 8001, rotating body 8004 rotates via torsion bar 8007. Torsion bar 8007 does not receive a torque exceeding a predetermined maximum torque. Therefore, if the difference between the absolute rotation angles of rotating bodies 8001 and 8004 exceeds a predetermined value, it is judged that detection device 6003 have an abnormal condition in the structure or in a circuit. Rotating body 8001 rotates, and accordingly, target 8003 rotates. Magnetic field from the magnetic poles of rotating target 8003 to be received by magnetic detector element 8015 varies according to the rotation of target 8003. Magnetic detector element 8015 outputs sine-wave signal 8019 and cosine-wave signal 8020 according to the magnetic field. Fig. 17A shows sine-wave signal 8019 and cosine-wave signal 8020 (the vertical axis) and the absolute rotation angle (the horizontal axis) of rotating body 8001. These signals are supplied to controller 8026 via amplifier 8025. Controller 8026 determines an arctangent signal based on sine-wave signal 8019 and cosine-wave signal 8020 as to determine the absolute rotation angle of rotating body 8001.

Rotating body 8004 rotates, and accordingly, target 8006 rotates. Magnetic field from the magnetic poles of rotating target 8006 to be received by magnetic detector element 8016 varies according to the rotation of target 8006. Magnetic detector element 8016 outputs sine-wave signal 8019 and cosine-wave signal 8020 according to the magnetic field. These signals are supplied to controller 8026 via amplifier 8025. Controller 8026 determines an arctangent signal based on sine-wave signal 8019 and cosine-wave signal 8020 as to determine the absolute rotation angle of rotating body 8004. In Figs. 20D and 20E, if respective initial points of absolute rotation angles 8034 and 8004 coincide with each other, the difference between absolute rotation angle 8034 of rotating body 8001 and absolute rotation angle 8035 of rotating body 8004 is not greater than a predetermined value as long as detection device 6003 is not out of order.

Next, a method of finding an abnormality of detection device 6003 by comparing the absolute rotation angles of rotating bodies 8001 and 8009 with referring to Figs. 15, 17A, 17B, 18A, 18B and 20A to 20E.

In Fig. 15, rotating body 8001 rotates, and accordingly, target 8003 rotates. In the case that the number of magnetic poles of target 8003 is thirty, as shown in Figs. 17A and 17B, each of sine-wave signal 8019 and cosine-wave signal 8020 changes by one cycle (i.e., an electrical angle of 180 degrees) every time rotating body 8001 rotates by 12 degrees. That is, the absolute rotation angle is obtained every 12 degree-rotation of rotating body 8001. Gear 8008 fixed to rotating body 8001 rotates, and accordingly, rotating body 8009 rotates via gear 8009A engaged with gear 8008. In the case that the ratio of the number of teeth of gear 8009A to that of gear 8008 is 1/3, as shown in Figs. 18A and 18B, each of sine-wave signal 8021 and cosine-wave signal 8022 changes by one cycle (i.e., an electrical angle of 180 degrees) every time rotating body 8001 rotates by 60 degrees. In Figs. 20A and 20D, respective initial position of absolute rotation angles 8031 and 8034 coincide with each other, and the gradient of absolute rotation angles 8031 and 8034 is corrected by the ratio of the rotation angles of one cycle (12:60=1:5). This prevents the difference between rotation angle 8034 of rotating body 8001 and rotation angle 8031 of rotating body 8009 from exceeding a predetermined value as long as detection device 6003 has abnormality.

Next, a method of reducing variations of sensitivities of magnetic detector elements 8011, 8014, 8015, and 8016 and amplifier 8025 as to prevent a detection error will be described.

In Fig. 15, target 8003 rotates, and accordingly, rotating body 8001 rotates. Magnetic field from the magnetic poles of rotating target 8003 received by magnetic detector element 8015 varies according to the rotation of target 8003. Magnetic detector element 8015 outputs sine-wave signal 8019 and cosine-wave signal 8020 according to the magnetic field.

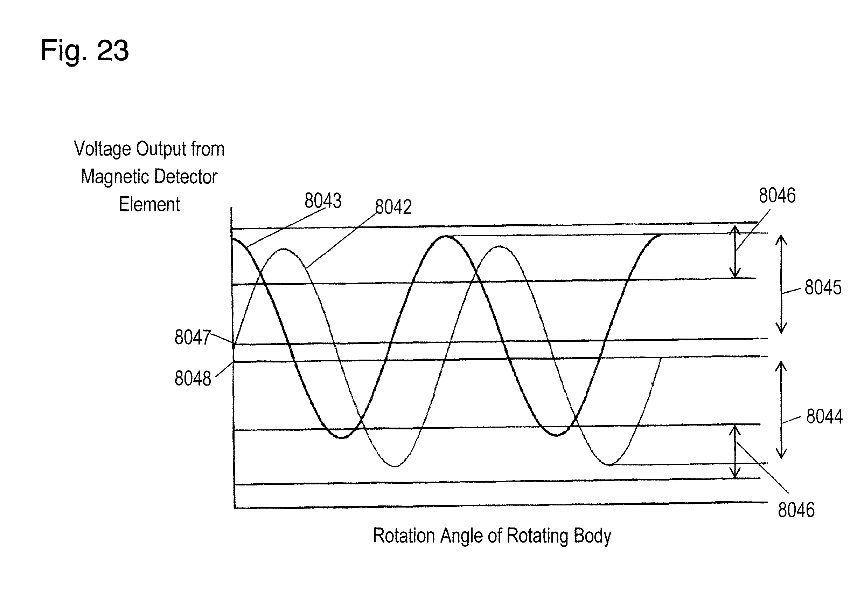

Sine-wave signal 8019 and cosine-wave signal 8020 are amplified by amplifier 8025 and supplied to controller 8026. Controller 8026 calculates an arctangent signal from sine-wave signal 8019 and cosine-wave signal 8020. Fig. 23 shows sine-wave signal 8042 and cosine-wave signal 8043 output from each of magnetic detector elements 8011, 8014, 8015 and 8016. Variations of characteristics of the magnetic detector elements and the amplifier may cause the difference between amplitude 8044 of sine-wave signal 8042 and amplitude 8045 of cosine-wave signal 8043, as shown in Fig. 23, and reduce accuracy of the calculated arctangent signal. Only while switch 8028 shown in Fig. 16 is turned on to initiate a sensitivity-storing mode, controller 8026 has rotating bodies 8001 and 8004 rotate more than 12 degrees and calculates amplitude 8044 of sine-wave signal 8042 and amplitude 8045 of cosine-wave signal 8043, i.e., the sensitivities. Controller 8026 stores the calculated sensitivities in nonvolatile memory 8027, such as EEPROM. Amplitude 8044 of sine-wave signal 8043 and amplitude 8045 of cosine-wave signal 8042 output from magnetic detector element 8016, which show sensitivity of the detector element, are stored in memory 8027. Switch 8028 is turned off to allow controller 8026 to determine the absolute rotation angles of rotating bodies 8001 and 8004. In this calculation, controller 8026 corrects sine-wave signal 8043 and cosine-wave signal 8042 based on the amplitudes (sensitivities) stored in memory 8027, so that the maximum value of sine-wave signal 8043 coincides with the maximum value of cosine-wave signal 8042, and the minimum value of sine-wave signal 8043 coincides with the minimum value of cosine-wave signal 8042. Then, controller 8026 calculates the arctangent signal, thereby determining the rotation angles of rotating bodies 8001 and 8004.

Similarly, switch 8028 is turned on to initiate the sensitivity-storing mode, and controller 8026 has rotating body 8001 rotate to have rotating bodies 8009 and 8012 rotate more than 180 degrees. Then, controller 8028 calculates the amplitudes (sensitivity) of sine-wave signals 8021 and 8023 and cosine-wave signals 8022 and 8024 shown in Figs. 18A and 19A, and stores the amplitudes in memory 8027. Controller 8026 corrects sine-wave signal 8043 and cosine-wave signal 8042 based on the sensitivities stored in memory 8027, so that the maximum value of sine-wave signal 8043 coincides with the maximum value of cosine-wave signal 8042, and the minimum value of sine-wave signal 8043 coincides with the minimum value of cosine-wave signal 8042. Then, controller 8026 calculates the arctangent signal, thereby determining the rotation angles of rotating bodies 8009 and 8012.

In the case that the maximum values and the minimum values output from magnetic detector elements 8015, 8016, 8011 and 8014 are out of reference range 8046 in Fig. 23, the signals may not change due to temperature characteristics or may not have a predetermined resolution. Detector 8025A judges whether or not the maximum value and the minimum value of the signals are within reference range 8046 to prevent an incorrect signal from being output. Controller 8026 corrects sine-wave signal 8042 and cosine-wave signal 8043, so that amplitude center 8048 coincides with amplitude center 8047, to prevent an incorrect signal from being output. In this case, controller 8026 may determine an average of amplitude centers of each of the sine-wave signals and cosine-wave signals input plural times. Alternatively, controller 8026 may calculate the average of each of the sine-wave signals and the cosine-wave signals with the maximum values and the minimum values excluded, thereby prevent incorrect signals from being output.

Memory 8027 may store signals output from magnetic detector elements 8015, 8016, 8011 and 8014 at a predetermined position or store the rotation angle calculated from the signals. This operation allows controller 8026 to detect an absolute rotation angle from the predetermined position. Memory 8017 may store signals output from magnetic detector elements 8015, 8016, 8011 and 8014 at a predetermined position or store the rotation angle calculated from the signals while no torque is applied to torsion bar 8007. This operation allows controller 8026 to determine an origin for detecting the torque. A signal indicating that the signals output from each of magnetic detector elements 8015, 8016, 8011 and 8014 correspond to the predetermined position may be sent via position-determining signal line 8029 shown in Fig. 16. This operation allows the predetermined position to be determined without mechanical operation. In this case, controller 14 may read the signal plural times to check the signal, or send the signal as a serial signal, thereby removing noise and incorrect signals. Position-determining signal line 8029 and output signal line 8030 may be implemented by a common terminal by switching the common terminal.

### INDUSTRIAL APPLICABILITY

A detection device according to the present invention detects a torque and an absolute rotation angle of plural turns accurately and precisely, hence being useful for a device, a power steering system of a vehicle, detecting a torque and an absolute rotation angle.

## Claims

1. A detection device for detecting a rotation angle and a torque, comprising:
a first rotating body;
a first target fixed to the first rotating body, the first target having a plurality of magnetic poles arranged at equal intervals;
a first gear fixed to the first rotating body;
a first magnetic detector element facing the magnetic poles of the first target to detect a rotation angle of the first rotating body;
a second gear engaged with the first gear;
a second rotating body having the second gear fixed thereto, the second rotating body rotating with the first rotating body at a speed slower than the first rotating body;
a first magnet provided at the second rotating body;
a second magnetic detector element facing the first magnet to detect a rotation angle of the second rotating body;
a third rotating body;
a second target fixed to the third rotating body, the second target having a plurality of magnetic poles arranged at equal intervals;
a third magnetic detector element facing the magnetic poles of the second target to detect a rotation angle of the third rotating body;
a torsion bar connected between the first rotating body and the second rotating body; and
a controller operable to determine the rotation angle of the first rotating body and a torque applied to the torsion bar based on signals output from the first magnetic detector element, the second magnetic detector element, and the third magnetic detector element.

2. The detection device of claim 1, wherein the number of the plurality of magnetic poles of the first target is identical to the number of the plurality of magnetic poles of the second target.

3. The detection device of claim 1, wherein the rotation angle of the first rotating body is an absolute rotation angle of a rotation thereof more than one turn.

4. The detection device of claim 1, further comprising
a memory for storing a sensitivity of at least one of the first magnetic detector element, the second magnetic detector element, and the third magnetic detector element,
wherein the controller is operable to corrects the signal output from the at least one of the first magnetic detector element, the second magnetic detector element, and the third magnetic detector element based on the sensitivity stored in the memory to determine the torque applied to the torsion bar.

5. The detection device of claim 4, further comprising
a detector for detecting whether the signal output from the at least one of the first magnetic detector element, the second magnetic detector element, and the third magnetic detector element is within a predetermined range or not.

6. The detection device of claim 4, further comprising
a detector for detecting whether an amplitude center of the signal output from the at least one of the first magnetic detector element, the second magnetic detector element, and the third magnetic detector element is within a predetermined range or not.

7. The detection device of claim 4, wherein the controller is operable to
receive the signal output from the at least one of the first magnetic detector element, the second magnetic detector element, and the third magnetic detector element a plurality of times, and determine the sensitivity of the at least one of the first magnetic detector element, the second magnetic detector element, and the third magnetic detector element according to the signal.

8. The detection device of claim 1, wherein the controller is operable to
store a signal output from the first magnetic detector element which corresponds to a predetermined position of the first rotating body, and
calculate an absolute rotation angle of the first rotating body from the predetermined position based on a signal output from at least one of the first magnetic detector element, the second magnetic detector element, and the third magnetic detector element.

9. The detection device of claim 1, wherein the first gear is a worm gear.

10. The detection device of claim 9, further contains a leaf spring for engaging the first gear with the second gear.

11. The detection device of claim 1, wherein
the first rotating body and the second rotating body comprise resin,
the first target comprises a first ring magnet having a ring shape, the first ring magnet being mold-inserted in the first rotating body, and
the second target comprises a second ring magnet having a ring shape, the second ring magnet being mold-inserted in the second rotating body.

12. The detection device of claim 1, wherein
the first rotating body has a recess provided in an outer periphery thereof, and
the first gear has a projection engaged in the recess of the first rotating body.

13. The detection device of claim 1, wherein
the first target comprises a ring magnet having a ring shape, the ring magnet being mold-inserted in the first rotating body, and
the first rotating body has a pawl to fix the ring magnet.

14. The detection device of claim 1 further comprising:
a third gear engaged with the second gear;
a fourth rotating body having the third gear fixed thereto, the fourth rotating body rotating at a rotation speed different from a rotation speed of the second rotating body;
a second magnet provided at the fourth rotating body; and
a fourth magnetic detector element facing the second magnet to detect a rotation angle of the fourth rotating body,
wherein, the controller is operable to determine the rotation angle of the first rotating body and the torque applied to the torsion bar based on signals output from the first magnetic detector element, the second magnetic detector element, the third magnetic detector element, and the fourth magnetic detector element.

15. The detection device of claim 14, wherein the controller is operable to
determine a rotation angle of the second rotating body and a rotation angle of the fourth rotating body based on the signal output from the second magnetic detector element and the signal output from the fourth magnetic detector element, and determine the rotation angle of the first rotating body based on the rotation angle of the second rotating body, the rotation angle of the fourth rotating body, and a difference between rotation angles of the second rotating body and the fourth rotating body.

16. The detection device of claim 15, wherein the controller is operable to
determine a rotation angle of the second rotating body and a rotation angle of the fourth rotating body based on signals output from the second magnetic detector element and the fourth magnetic detector element,
determine the rotation angle of the first rotating body based on a signal output from the first magnetic detector element, and
determine a rotation angle of the first rotating body more than one turn based on the rotation angle of the second rotating body, the rotation angle of the fourth rotating body, the difference between the rotation angles of the second rotating body and the fourth rotating body, and the determined rotation angle of the first rotation body.

17. The detection device of claim 14, further comprising
a memory for storing a sensitivity of at least one of the first magnetic detector element, the second magnetic detector element, the third magnetic detector element, and the fourth magnetic detector element,
wherein the controller corrects the signal output from the at least one of the first magnetic detector element, the second magnetic detector element, the third magnetic detector element, and the fourth magnetic detector element based on the sensitivity stored in the memory to determine the torque applied to the torsion bar.

18. The detection device of claim 14, further contains a detector for detecting whether a signal output from the at least one of the first magnetic detector element, the second magnetic detector element, the third magnetic detector element, and the fourth magnetic detector element is within a predetermined range or not.

19. The detection device of claim 14, further contains a detector for detecting whether an amplitude center of a signal output from the at least one of the first magnetic detector element, the second magnetic detector element, the third magnetic detector element, and the fourth magnetic detector element is within a predetermined range or not.

20. The detection device of claim 14, wherein the controller is operable to
store a signal output from the first magnetic detector element corresponding to a predetermined position of the first rotating body, and
determine an absolute rotation angle of the first rotating body from the predetermined position based on a signal output from the at least one of the first magnetic detector element, the second magnetic detector element, the third magnetic detector element, and the fourth magnetic detector element.
